# EUROPEAN PATENT SPECIFICATION

(11) **EP 1 868 736 B1**
(45) Date of publication and mention of the grant of the patent: **26.08.2009**
(21) Application number: 06737652.5
(22) Date of filing: 09.03.2006
(51) Int. Cl.: B05D 7/00, C09D 133/06, C09D 175/16

(54) **COATING COMPOSITIONS CONTAINING HIGHLY CROSSLINKED POLYMER PARTICLES AND A HYDROPHOBIC POLYMER**
BESCHICHTUNGSZUSAMMENSETZUNGEN MIT HOCH VERNETZTEN POLYMERTEILCHEN UND EINEM HYDROPHOBEN POLYMER
COMPOSITIONS D' ENDUCTION CONTENANT DES PARTICULES DE POLYMERE HAUTEMENT RETICULE ET UN POLYMERE HYDROPHOBE

(30) Priority: 24.03.2005 US 89163
(43) Date of publication of application: 26.12.2007
(73) Proprietor: PPG Industries Ohio, Inc., Cleveland, OH 44111 (US)
(72) Inventor: SWARUP, Shanti, Allison Park, PA 15101 (US); MCHENRY, Deena M., Cranberry Township, PA 16066 (US); PAGAC, Edward, S., Ortonville, MI 48462 (US); ZEZINK, Elizabeth, A., Cranberry Township, PA 16066 (US); TAYLOR, Cathy, A., Allison Park, PA 15101 (US)
(74) Representative: Polypatent
(86) International application number: PCT/US2006/008493
(87) International publication number: WO 2006/104664

(56) References cited:
- WO-A-97/42247
- US-A- 4 477 536
- US-A- 4 563 372
- US-A- 5 510 148
- US-A1- 2003 220 446

## Description

### FIELD OF THE INVENTION

The present invention relates generally to coating compositions and substrates coated with such compositions, as well as to a method for repairing such coated substrates.

### BACKGROUND OF THE INVENTION

Typically, automotive coatings processes include the application of several different coating layers onto an automobile body. These coating layers can include for example, an electrodeposition primer layer, a sealer layer, a basecoat layer, and a clearcoat layer. The coating compositions used to form each of these coating layers may be waterborne or solventborne compositions or in solid particulate form. Due to recent government VOC regulations, one or more of these coating layers typically is formed from waterborne coating compositions. Each of these original layers may require a thermal bake at a relatively high temperature to achieve complete cure of the coating. For example, an original clearcoat layer may be cured at a temperature within the range of 250°F to 300°F (121°C to 149°C), in order to achieve complete cure of this clearcoat layer, as well as full cure of any of the previously applied coating layers, e.g. a basecoat layer.

In certain circumstances, after the application and cure of all original coating layers is complete, there may be a flaw or defect present in one of the layers, such as a crater or a dirt particle, that requires repair of that particular area. This repair process typically involves removing the defect, such as by sanding, followed by re-application of one of more of the coating layers. Often times, a basecoat layer and a clearcoat layer are reapplied after the defect is removed. The bake temperature of one or more of the coating layers applied during this repair process may be lower than that used to cure the original layer. For example, a repair clearcoat layer may be capable of curing at temperatures, such as within the range of 160°F to 180°F (71°C to 82°C), in order to achieve complete cure.

US-4563372 discloses a top coat composition containing microgel particles which will upgrade the resulting finish by improved gloss when applied to the exterior of automobiles.

One possible drawback to this repair process can be the poor water resistance properties of the repair coating layers resulting in coating defects e.g. blistering. Such blistering can result in a loss of adhesion between the coating layers, such as between the basecoat and clearcoat layers.

Therefore, it would be desirable to provide a coating composition, which is useful as both an original and a repair finish, contains low or no VOC or HAP (i.e. Hazardous Air Pollutant) materials, and provides improved water resistance properties demonstrated by improved blistering resistance and improved adhesion between the coating layers.

### SUMMARY OF THE INVENTION

In one embodment, the present invention is directed to a coating composition comprising:
(I) a latex emulsion comprising crosslinked polymeric microparticles dispersed in an aqueous continuous phase, the polymeric microparticles prepared from a monomer mix comprising:
   (a) at least 20 weight percent of a crosslinking monomer having two or more groups of reactive unsaturation and/or a monomer having a functional group capable of reacting to form crosslinks after polymerization;
   (b) at least 2 weight percent of a polymerizable ethylenically unsaturated monomers having hydrophilic functional groups, the monomer having the following structure (I) or (II): 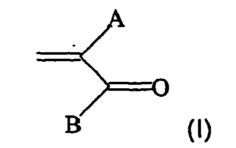 or 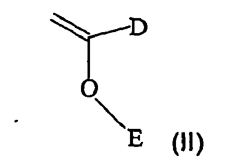 wherein A represents H or C₁-C₃ alkyl; B represents - NR¹R², -OR³ or -SR⁴, where R¹ and R² are independently H, C₁-C₁₈ alkyl, C₁-C₁₈ alkylol or C₁-C₁₈ alkylamino, R³ and R⁴ are independently C₁-C₁₈ alkylol, C₁-C₁₈ alkylamino, -CH₂CH₂-(OCH₂CH₂)ₙ-OH where n is 0 to 30, or , - CH₂CH₂-(OC(CH₃)HCH₂)ₘ-OH where m is 0 to 30; D represents H or C₁-C₃ alkyl; and E represents -CH₂CHOHCH₂OH, C₁-C₁₈ alkylol, -CH₂CH₂-(OCH₂CH₂)ₙ-OH where n is 0 to 30, or -CH₂CH₂-(OC(CH₃)HCH₂)ₘ-OH where m is 0 to 30; and
   (c) optionally, the balance comprised of a polymerizable ethylenically unsaturated monomer, wherein (a), (b) and (c) are different from each other; and
(II) a polymer comprising:
   (i) a C₈ to C₂₀ alkyl ester of (meth)acrylic acid;
   (ii) a polymerizable ethylenically unsaturated monomer comprising a polar functional group; and
   (iii) optionally, a polymerizable ethylenically unsaturated monomer, wherein (i), (ii) and (iii) are different from each other; and wherein the polymer has a glass transition temperature of no more than -10°C.

The present invention is also directed to a thermosetting composition comprising:
(I) a first reactant comprising reactive functional groups;
(II) a curing agent comprising functional groups reactive with the functional groups of the first reactant (I); and
(III) a latex emulsion comprising crosslinked polymeric microparticles dispersed in an aqueous continuous phase, the polymeric microparticles prepared from a monomer mix comprising:
   (a) at least 20 weight percent of a crosslinking monomer having two or more groups of reactive unsaturation and/or a monomer having a functional group capable of reacting to form crosslinks after polymerization;
   (b) at least 2 weight percent of a polymerizable ethylenically unsaturated monomer having hydrophilic functional groups, the monomer having the following structure (I) or (II): 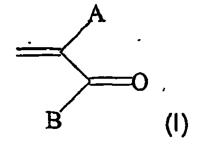 or 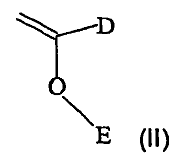 wherein A represents H or C₁-C₃ alkyl; B represents - NR¹R², -OR³ or-SR⁴, where R¹ and R² are independently H, C₁-C₁₈ alkyl, C₁-C₁₈ alkylol or C₁-C₁₈ alkylamino, R³ and R⁴ are independently C₁-C₁₈ alkylol, C₁-C₁₈ alkylamino, -CH₂CH₂-(OCH₂CH₂)ₙ-OH where n is 0 to 30, or , - CH₂CH₂-(OC(CH₃)HCH₂)ₘ-OH where m is 0 to 30; D represents H or C₁-C₃ alkyl; and E represents -CH₂CHOHCH₂OH, C₁-C₁₈ alkylol, -CH₂CH₂-(OCH₂CH_{z})ₙ-OH where n is 0 to 30, or -CH₂CH₂-(OC(CH₃)HCH₂)ₘ-OH where m is 0 to 30; and
   (c) optionally, the balance comprised of a polymerizable ethylenically unsaturated monomers, wherein (a), (b) and (c) are different from each other; and
(IV) a polymer comprising:
   (i) a C₈ to C₂₀ alkyl ester of (meth)acrylic acid;
   (ii) a polymerizable ethylenically unsaturated monomer comprising a polar functional group; and
   (iii) optionally, a polymerizable ethylenically unsaturated monomer, wherein (i), (ii) and (iii) are different from each other; and wherein the polymer has a glass transition temperature of no more than -10°C.

Further, the present invention is directed to a method of repairing a defect in a multi-layer coating comprising applying the coating composition of the present invention.

### DETAILED DESCRIPTION OF THE INVENTION

As used herein, by "thermosetting composition" is meant one which "sets" irreversibly upon curing or crosslinking, wherein the polymer chains of the polymeric components are joined together by covalent bonds. This property is usually associated with a crosslinking reaction of the composition constituents often induced, for example, by heat or radiation. Hawley, Gessner G., The Condensed Chemical Dictionary, Ninth Edition., page 856; Surface Coatings, Vol. 2, Oil and Colour Chemists' Association, Australia, TAFE Educational Books (1974). Curing or crosslinking reactions also may be carried out under ambient conditions. Once cured or crosslinked, a thermosetting composition will not melt upon the application of heat and is insoluble in solvents. By contrast, a "thermoplastic composition" comprises polymeric components which are not joined by covalent bonds and thereby can undergo liquid flow upon heating and are soluble in solvents. Saunders, K.J., Organic Polymer Chemistry, pp. 41-42, Chapman and Hall, London (1973).

As used herein, the term "polymer" is meant to encompass prepolymers, oligomers, and includes without limitation both homopolymers and copolymers. Also, as used herein, the term "reactive" refers to a functional group that forms a covalent bond with another functional group under conditions sufficient to cure the composition. As used herein, the term "capable of reacting" with regard to a functional group refers to the capability of a functional group to form a covalent bond with another functional group.

As used herein, the term "polyisocyanate", unless otherwise indicated, is intended to include blocked (or capped) isocyanates as well as , unblocked (poly)isocyanates.

As used herein, the phrase components "are different from each other" refers to components which do not have the same chemical structure as other components in the composition.

As used herein, the term "glass transition temperature" refers to the temperature at which an amorphous material, such as glass or a high polymer, changes from a brittle vitreous state to a plastic state. For purposes of this invention, the glass transition temperature is theoretically calculated according to the equation described on page 29 in The Chemistry of Organic Film Former by D.H. Solomon, Wiley and Sons, 1967.

As used herein, the term "cure" as used in connection with a composition, e.g., "composition when cured," shall mean that any crosslinkable components of the composition are at least partially crosslinked. In certain embodiments of the present invention, the crosslink density of the crosslinkable components, i.e., the degree of crosslinking, ranges from 5% to 100% of complete crosslinking.

As indicated, the present invention is directed to a coating composition comprising:
(I) a latex emulsion comprising crosslinked polymeric microparticles dispersed in an aqueous continuous phase, the polymeric microparticles prepared from a monomer mix comprising:
   (a) at least 20 weight percent of a crosslinking monomer having two or more groups of reactive unsaturation and/or a monomer having a functional group capable of reacting to form crosslinks after polymerization;
   (b) at least 2 weight percent of a polymerizable ethylenically unsaturated monomer having hydrophilic functional groups, the monomer having the following structure (I) or (II): 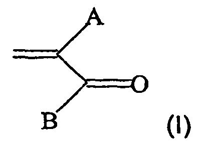 or 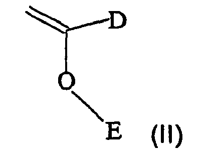 wherein A represents H or C₁-C₃ alkyl; B represents - NR¹R², -OR³ or -SR⁴, where R¹ and R² are independently H, C₁-C₁₈ alkyl, C₁-C₁₈ alkylol or C₁-C₁₈ alkylamino, R³ and R⁴ are independently C₁-C₁₈ alkylol, C₁-C₁₈ alkylamino, -CH₂CH₂-(OCH₂CH₂)ₙ-OH where n is 0 to 30, or , - CH₂CH₂-(OC(CH₃)HCH₂)ₘ-OH where m is 0 to 30; D represents H or C₁-C₃ alkyl; and E represents -CH₂CHOHCH₂OH, C₁-C₁₈ alkylol, -CH₂CH₂-(OCH₂CH₂)ₙ-OH where n is 0 to 30, or -CH₂CH₂-(OC(CH₃)HCH₂)ₘ-OH where m is 0 to 30; and
   (c) optionally, the balance comprised of a polymerizable ethylenically unsaturated monomer, wherein (a), (b) and (c) are different from each other; and
(II) a polymer comprising:
   (i) a C₈ to C₂₀ alkyl ester of (meth)acrylic acid;
   (ii) a polymerizable ethylenically unsaturated monomer comprising a polar functional group; and
   (iii) optionally, a polymerizable ethylenically unsaturated monomer, wherein (i), (ii) and (iii) are different from each other; and wherein the polymer has a glass transition temperature of no more than -10°C.

By "alkylol" is meant a hydrocarbon radical that contains one or more hydroxyl groups. By "alkylamino" is meant a hydrocarbon radical that contains one or more amine groups. As used herein, "(meth)acrylic acid" and like terms are intended to include acrylic acid and/or methacrylic acid. As used herein, when referring to the latex emulsion that includes crosslinked polymeric microparticles dispersed in an aqueous continuous phase, a "suitable" material is a material that may be used in or in preparing the latex emulsion that includes crosslinked polymeric microparticles dispersed in an aqueous continuous phase, so long as the material does not substantially affect the stability of the latex emulsion or the polymerization process.

Crosslinking monomers suitable for use as the crosslinking monomer (a) of latex emulsion (I) can include any monomer having two or more sites of reactive unsaturation, or any monomer that has a functional group capable of reacting to form crosslinks after polymerization. As used herein, functional groups that are capable of reacting to form crosslinks after polymerization refer to functional groups on a first polymer molecule that may react under appropriate conditions to form covalent bonds with functional groups on a second polymer molecule to form a crosslinked polymer. Functional groups that may react to form crosslinks include, but are not limited to N-alkoxymethyl amides, N-methylolamides, lactones, lactams, mercaptans, hydroxyls, epoxides and the like. Examples of such monomers include, but are not limited to, N-alkoxymethyl(meth)acrylamides, γ-(meth)acryloxytrialkoxysilane, N-methylol(meth)acrylamide, N-butoxymethyl(meth)acrylamide, (meth)acryliclactones, N-substituted (meth)acrylamide lactones, (meth)acryliclactams, and N-substituted (meth)acrylamide lactams and glycidyl (meth)acrylate.

As mentioned above, in one embodiment of the present invention, the crosslinking monomer can have two sites of reactive unsaturation. In a further embodiment, the crosslinking monomer may comprise ethylene glycol di(meth)acrylate, triethylene glycol di(meth)acrylate, tetraethylene glycol di(meth)acrylate, 1,3-butylene glycol di(meth)acrylate, trimethylolpropane tri(meth)acrylate, 1,4-butanediol di(meth)acrylate, neopentyl glycol di(meth)acrylate, 1,6-hexanediol di(meth)acrylate, pentaerythritol di(meth)acrylate, pentaerythritol tri(meth)acrylate, pentaerythritol tetra(meth)acrylate, glycerol di(meth)acrylate, glycerol allyloxy di(meth)acrylate, 1,1,1-tris(hydroxymethyl)ethane di(meth)acrylate, 1,1,1-tris(hydroxymethyl)ethane tri(meth)acrylate, 1,1,1-tris(hydroxymethyl)propane di(meth)acrylate, 1,1,1-tris(hydroxymethyl)propane tri(meth)acrylate, triallyl cyanurate, triallyl isocyanurate, triallyl trimellitate, diallyl phthalate, diallyl terephthalate, divinyl benzene, methylol (meth)acrylamide; triallylamine; and/or methylenebis (meth) acrylamide.

The crosslinking monomer (a) comprises at least 15 weight percent, or at least 20 weight percent, or at least 22.5 weight percent, or at least 25 weight percent of the monomer mix used to prepare the polymeric microparticles. Also, the crosslinking monomer comprises not more than 45 weight percent, or not more than 40 weight percent, or not more than 35 weight percent, or not more than 30 weight percent of the monomer mix used to prepare the polymeric microparticles. The level of the crosslinking monomer (a) used is determined by the desired properties that are to be incorporated into the resulting microparticle. The crosslinking monomer may be present in the monomer mix at any value or in any combination of the recited ranges inclusive of those values stated above.

Any polymerizable ethylenically unsaturated monomers having hydrophilic functional groups can be used as the monomer (b). In a particular embodiment of the present invention, polymerizable ethylenically unsaturated monomers having hydrophilic functional groups described by structures I and/or II above may be used as the monomer (b) provided that the monomer can be polymerized in a latex emulsion polymerization system and does not substantially affect the stability of the latex emulsion or the polymerization process.

Polymerizable ethylenically unsaturated monomers having hydrophilic functional groups suitable for use as the monomer (b) in the preparation of the polymeric microparticles of the present invention include, but are not limited to (meth)acrylamide, hydroxyethyl(meth)acrylate, hydroxypropyl(meth)acrylate, dimethylaminoethyl (meth)acrylate, allyl glycerol ether, methallyl glycerol ether and/or polyethyleneoxide allyl ether.

In an embodiment of the present invention, a particular advantage of the present crosslinked polymeric microparticles is that they do not require the presence of an alkaline material to swell the microparticles, thereby providing desired rheological properties. This eliminates the additional processing step of adding an alkaline material to promote particle swelling and renders the resulting rheological properties more predictable.

In another embodiment of the present invention, the polymerizable ethylenically unsaturated monomers having hydrophilic functional groups (b) include monomers described by structure (I) above.

In a further embodiment of the present invention, the polymerizable ethylenically unsaturated monomers having hydrophilic functional groups (b) include monomers described by structure (II) above.

The polymerizable ethylenically unsaturated monomer having hydrophilic functional groups (b) comprises at least 2 weight percent, or greater than 2 weight percent, or at least 5 weight percent, or greater than 5 weight percent, or at least 7 weight percent, or at least 8 weight percent of the monomer mix used to prepare the polymeric microparticles. The polymerizable ethylenically unsaturated monomer having hydrophilic functional groups comprises not more than 35 weight percent, or not more than 30 weight percent, or not more than 20 weight percent, or not more than 15 weight percent of the monomer mix used to prepare the polymeric microparticles. The level of the polymerizable ethylenically unsaturated monomer having hydrophilic functional groups used is determined by the properties that are to be incorporated into the resulting microparticle. The level of the polymerizable ethylenically unsaturated monomer having hydrophilic functional groups present in the monomer mix can range between any combination of the recited values inclusive of the recited values.

Polymerizable ethylenically unsaturated monomers suitable for use as the monomer (c) which, optionally, make up the remainder of the monomer mix, and which are different from the crosslinking monomer (a) and the monomer having hydrophilic functional groups (b), may be included in the polymeric microparticles of the present invention. Any suitable polymerizable ethylenically unsaturated monomer may be used, provided that it is capable of being polymerized in a latex emulsion polymerization system and does not substantially affect the stability of the latex emulsion or the polymerization process. Suitable polymerizable ethylenically unsaturated monomers include, but are not limited to, methyl(meth)acrylate, ethyl(meth)acrylate, propyl(meth)acrylate, N-butyl(meth)acrylate, t-butyl(meth)acrylate, 2-ethylhexyl(meth)acrylate, isobornyl (meth)acrylate, dimethylaminoethyl (meth)acrylate, styrene, (meth)acrylonitrile, lauryl (meth)acrylate, cyclohexyl (meth)acrylate, and/or 3,3,5-trimethylcyclohexyl (meth)acrylate.

The polymerizable ethylenically unsaturated monomer (c) may comprise at least 20 weight percent, or at least 30 weight percent, or at least 40 weight percent, or at least 50 weight percent of the monomer mix used to prepare the polymeric microparticles. The polymerizable ethylenically unsaturated monomers may comprise not more than 80 weight percent, or not more than 75 weight percent, or not more than 70.5 weight percent, or not more than 67 weight percent of the monomer mix used to prepare the polymeric microparticles. The level of the polymerizable ethylenically unsaturated monomer (c) which can be used is determined by the properties that are to be incorporated into the resulting microparticle. The level of the polymerizable ethylenically unsaturated monomer (c) present in the monomer mix may range between any combination of the recited values inclusive of the recited values.

In a particular embodiment of the present invention, the crosslinking monomer (a) comprises glycol di(meth)acrylates and/or glycol tri(meth)acrylates; the polymerizable ethylenically unsaturated monomer having hydrophilic functional groups (b) comprises (meth)acrylamide; and the polymerizable ethylenically unsaturated monomer (c) comprises an alkyl(meth)acrylate.

The latex emulsion (I) of crosslinked polymeric microparticles dispersed in an aqueous continuous phase is prepared by latex emulsion polymerization of (a), (b) and optionally, (c) as described above. In many cases, the monomer mixture of (a), (b) and (c) will readily disperse into stable monomer droplets and micelles as would be expected in a Smith-Ewart type of process. In such cases, no monomeric or polymeric emulsifiers and/or protective colloids are added to the latex emulsion, and the latex emulsion is substantially free of polymeric emulsifiers and/or protective colloids. It should be understood, however, that in some cases, a surface active agent may be added to the aqueous continuous phase to stabilize, or prevent coagulation or agglomeration of the monomer droplets, especially during polymerization.

A surface active agent can be present in the latex emulsion of the present invention at any level that stabilizes the emulsion. The surface active agent may be present at least 0.001 percent by weight, or at least 0.005 percent by weight, or at least 0.01 percent by weight, or at least 0.05 percent by weight based on the total weight of the latex emulsion. The surface active agent may be present at not more than 10 percent by weight, or not more than 7.5 percent by weight, or not more than 5 percent by weight, or not more than 3 percent by weight based on the total weight of the latex emulsion. The level of the surface active agent used is determined by the amount required to stabilize the latex emulsion. The surface active agent may be present in the latex emulsion at any level or in any range of levels inclusive of those stated above.

The surface active agent may be an anionic, cationic, or nonionic surfactant or dispersing agent, or compatible mixtures thereof, such as a mixture of an anionic and a nonionic surfactant. Such surfactants and dispersing agents are well known in the art, any of a variety of which may be suitable.

A free radical initiator typically is used in the latex emulsion polymerization process. Any suitable free radical initiator as are well known in the art may be used. Suitable free radical initiators include, but are not limited to thermal initiators, photoinitiators and oxidation-reduction initiators, all of which may be otherwise categorized as being water-soluble initiators or non-water-soluble initiators.

In one embodiment of the present invention, the average particle size of the polymeric microparticles may be at least 0.001 microns, or at least 0.005 microns, or at least 0.01, or at least 0.02 microns. The average particle size of the polymeric microparticles typically is not more than 1 micron, or not more than 0.9 microns or not more than 0.8 microns. The average particle size of the polymeric microparticles may be any value or in any range of values inclusive of those stated above

In another embodiment of the present invention, the latex emulsion of crosslinked polymeric microparticles dispersed in an aqueous continuous phase is prepared by a seeded latex emulsion polymerization process. Such a seeded latex emulsion polymerization process includes:
(I) providing an overall monomer composition that includes constituent parts of:
   (a) at least 20 weight percent of the overall monomer composition including a crosslinking monomer such as any of those described in detail above;
   (b) at least 2 weight percent of the overall monomer composition of a polymerizable ethylenically unsaturated monomer having hydrophilic functional groups such as any of those having the structures (I) or (II) described above; and
   (c) the balance of the overall monomer composition including one or more polymerizable ethylenically unsaturated monomers such as any of those described in detail above with respect to the polymerizable ethylenically unsaturated monomer (c) in the latex emulsion that includes crosslinked microparticles, where (a), (b) and (c) are different from each other;
(II) polymerizing a portion of the overall monomer mix, the portion including from 0.1 to 20 weight percent of (a) and from 0.1 to 20 weight percent of (c) to form polymeric seeds dispersed in the continuous phase; and
(III) polymerizing the remainder of monomers (a), (b) and (c) in the presence of the dispersed polymeric seeds prepared in step (II) to form a latex emulsion of seeded polymeric microparticles.

In certain embodiments of the present invention, the coating composition also comprises a polymer (II) comprising (i) a C₈ to C₂₀ alkyl ester of (meth)acrylic acid; (ii) a polymerizable ethylenically unsaturated monomer comprising a polar functional group; and (iii) optionally, a polymerizable ethylenically unsaturated monomer, wherein (i), (ii) and (iii) are different from each other; and wherein the polymer has a glass transition temperature of no more than -10°C.

The C₈ to C₂₀ alkyl ester of (meth)acrylic acid (i) of polymer (II) can comprise, for example, octyl (meth)acrylate, lauryl (meth)acrylate, cetyl (meth)acrylate, stearyl (meth)acrylate, behenyl (meth)acrylate, and/or eicosyl (meth)acrylate. In a particular embodiment, the C₈ to C₂₀ alkyl ester of (meth)acrylic acid comprises lauryl (meth)acrylate.

The C₈ to C₂₀ alkyl ester of (meth)acrylic acid used to prepare polymer (II) may be present at an amount of at least 50 weight percent and not more than 99.9 weight percent based on total weight of monomer solids.

In an embodiment of the present invention, the C₈ to C₂₀ alkyl ester of (meth)acrylic acid may comprise at least 50 weight percent, or at least 70 weight percent, or at least 90 weight percent based on the total weight of monomer solids used to prepare polymer (II). The C₈ to C₂₀ alkyl ester of (meth)acrylic acid may comprise not more than 99.9 weight percent, or not more than 95 weight percent, or not more than 85 weight percent based on the total weight of monomer solids used to prepare polymer (II). The level of the C₈ to C₂₀ alkyl ester of (meth)acrylic acid which can be used is determined by the properties that are to be incorporated into the resulting polymer (II). The level of the C₈ to C₂₀ alkyl ester of (meth)acrylic acid present in the monomer mix may range between any combination of the recited values inclusive of the recited values.

In addition to the C₈ to C₂₀ alkyl ester of (meth)acrylic acid as described above, polymer (II) comprises a polymerizable ethylenically unsaturated monomer comprising a polar functional group. As used herein, the term "polar functional group" refers to a functional group having a high dielectric constant and strong polarity. Any suitable polymerizable ethylenically unsaturated monomer having a polar functional group can be used.

The polar functional group can comprise, for example, carboxyl groups, hydroxyl groups, and/or amine groups. In an embodiment of the present invention, the polar functional group comprises a carboxyl group. In a particular embodiment, the ethylenically unsaturated monomer (ii) of polymer (II) comprises (meth)acrylic acid.

In certain embodiments, the ethylenically unsaturated monomer (ii) used to prepare polymer (II) is present at an amount of at least 0.1 weight percent and not more than 5 weight percent based on total weight of monomer solids.

In a particular embodiment of the present invention, the ethylenically unsaturated monomer (ii) may comprise at least 0.1 weight percent, or at least 1 weight percent, or at least 4 weight percent based on the total weight of monomer solids used to prepare polymer (II). The ethylenically unsaturated monomer (ii) also may comprise not more than 5 weight percent, or not more than 3 weight percent, or not more than 2 weight percent based on the total weight of monomer solids used to prepare polymer (II). The level of the ethylenically unsaturated monomer (ii) which can be used is determined by the properties that are to be incorporated into the resulting polymer (II). The level of the ethylenically unsaturated monomer (ii) present in the monomer mix may range between any combination of the recited values inclusive of the recited values.

In other embodiments, the polymer (II) optionally comprises a polymerizable ethylenically unsaturated monomer, wherein (i), (ii) and (iii) are different from each other. As previously discussed, any suitable polymerizable ethylenically unsaturated monomer may be used, provided that the polymer (II) has a glass transition temperature of no more than -10°C. Further, if present, these polymerizable ethylenically unsaturated monomers may be present in any suitable amount provided that the glass transition temperature of polymer (II) does not exceed -10°C. In a particular embodiment of the present invention, polymer (II) has a glass transition temperature of no more than -30°C.

In certain embodiments, polymer (II) is present in the coating composition at an amount of at least 2 weight percent, or at least 5 weight percent resin solids based on the total weight of resin solids of the coating composition. The polymer (II) may be present in the coating composition at an amount of not more than 30 weight percent, or not more than 15 weight percent resin based on the total weight of resin solids of the coating composition. The level of polymer (II) which can be used is determined by the properties that are to be incorporated into the resulting coating composition. The level of the polymer (II) present in the coating composition may range between any combination of the recited values inclusive of the recited values.

In addition to the dispersions of crosslinked microparticles and polymer described above, certain embodiments of the coating compositions of the present invention further comprise an aqueous polyurethane dispersion, comprising polyurethane-acrylate particles dispersed in an aqueous medium. Suitable polyurethane-acrylate particles can comprise the reaction product obtained by polymerizing the components of a pre-emulsion formed from:
(A) an active hydrogen-containing polyurethane acrylate prepolymer, comprising a reaction product obtained by reacting:
   (i) a polyol;
   (ii) a polymerizable ethylenically unsaturated monomer comprising a hydroxyl group;
   (iii) a compound comprising a C₁-C₃₀ alkyl group having at least two active hydrogen groups comprising carboxylic acid groups, and/or hydroxyl groups, wherein at least one active hydrogen group is a hydroxyl group; and
   (iv) a polyisocyanate;
(B) one or more hydrophobic polymerizable ethylenically unsaturated monomers; and
(C) a crosslinking monomer;
   wherein the polyurethane acrylate prepolymer of (A) includes at least 30 percent by weight of polyurethane acrylate prepolymer comprising one or more prepolymers having a terminal polymerizable site of ethylenic unsaturation at one end of the molecule and an active hydrogen-containing group at the opposite end of the molecule; and at least 10 percent by weight of the polyurethane acrylate prepolymer comprising a prepolymer having a terminal polymerizable site of ethylenic unsaturation at each end of the molecule.

The active hydrogen-containing polyurethane acrylate prepolymer (A) in the polyurethane-acrylate particles is present in an amount of at least 20 percent by weight, or at least 25 percent by weight, or at least 30 percent by weight, or at least 35 percent by weight or at least 40 percent by weight of the solids of the polyurethane-acrylate particles. Further, the active hydrogen-containing polyurethane acrylate prepolymer (A) may be present in an amount of up to 80 percent by weight, or up to 75 percent by weight, or up to 70 percent by weight, or up to 65 percent by weight or up to 60 percent by weight of the solids of the polyurethane-acrylate particles. The level of active hydrogen-containing polyurethane acrylate prepolymer (A) in the polyurethane-acrylate particles can be any value or range between any combination of these values inclusive of the recited valuers.

The hydrophobic polymerizable ethylenically unsaturated monomers (B) in the polyurethane-acrylate particles are present in an amount of at least 20 percent by weight, or at least 25 percent by weight, or at least 30 percent by weight, or at least 35 percent by weight or at least 40 percent by weight of the solids of the polyurethane-acrylate particles. Further, the hydrophobic polymerizable ethylenically unsaturated monomers (B) may be present in an amount of up to 80 percent by weight, or up to 75 percent by weight, or up to 70 percent by weight, or up to 65 percent by weight or up to 60 percent by weight of the solids of the polyurethane-acrylate particles. The level of hydrophobic polymerizable ethylenically unsaturated monomers (B) in the polyurethane-acrylate particles can be any value or range between any combination of these values inclusive of the recited values.

The crosslinking monomer (C) in the polyurethane-acrylate particles is present in an amount of at least 1 percent by weight, or at least 2 percent by weight, or at least 3 percent by weight, or at least 4 percent by weight or at least 5 percent by weight of the solids of the polyurethane-acrylate particles. Further, the crosslinking monomer (C) may be present in an amount of up to 20 percent by weight, or up to 17.5 percent by weight, or up to 15 percent by weight, or up to 12.5 percent by weight or up to 10 percent by weight of the solids of the polyurethane-acrylate particles. The level of crosslinking monomer (C) in the polyurethane-acrylate particles can be any value or range between any combination of these values inclusive of the recited values.

The value of (A) + (B) + (C) can be 100%, but will be less than 100% when other components as are known to those skilled in the art are also included in the polyurethane-acrylate particles.

The polyol of (i) may be one or more polyols selected from a polyether polyol, a polyester polyol, an acrylic polyol, or a mixture thereof. In an embodiment of the present invention, the polyol is one or more-polyether polyols described by structure VII: 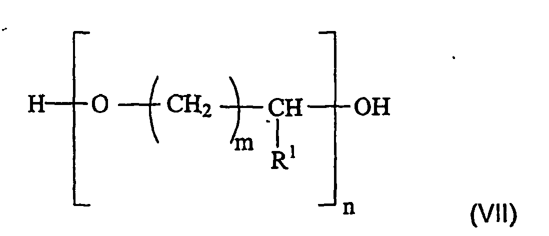 where R¹ is H or C₁-C₅ alkyl including mixed substituents for example, n is from 1 to 200 and m is from 1 to 5. Examples of suitable polyetherpolyols that may be used include, but are not limited to, poly(oxytetramethylene) glycols; poly(oxyethylene) glycols; poly(oxy-1,2-propylene) glycols; 1,6-hexanediol; poly(tetrahydrofuran); trimethylolpropane; sorbitol; pentaerythritol; the reaction products of ethylene glycol with a mixture of 1,2-propylene oxide and ethylene oxide; the reaction products obtained by the polymerization of ethylene oxide, propylene oxide and tetrahydrofuran and mixtures of polyols can be used as polyol (i).

In another embodiment of the present invention, the polymerizable ethylenically unsaturated monomer comprising a hydroxyl group of (ii) may be one or more monomers described by structure VIII: 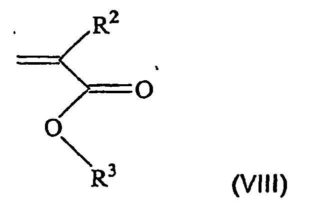 where R² represents H or C₁-C₄ alkyl and R³ represents selected from -(CHR⁴)ₚ-OH,-CH₂CH₂-(O-CH₂-CHR⁴)ₚ-OH, -CH₂-CHOH-CH₂-O-CO-CR⁵R⁶R⁷, or -CH₂-CHR⁴-O-CH₂-CHOH-CH₂-O-CO-CR⁵R⁶R⁷ where R⁴ represents H or C₁-C₄ alkyl, R⁵, R⁶, and R⁷ represent H or C₁-C₂₀ linear or branched alkyl, and p is an integer from 0 to 20. Examples of polymerizable ethylenically unsaturated monomer comprising a hydroxyl group that may be used in the present invention as component (ii) include, but are not limited to, hydroxyethyl(meth)acrylate, hydroxypropyl(meth)acrylate, hydroxybutyl(meth)acrylate, polyethyleneglycol ester of (meth)acrylic acid, polypropyleneglycol ester of (meth)acrylic acid, the reaction product of (meth)acrylic acid and the glycidyl ester of versatic acid, the reaction product of hydroxyethyl(meth)acrylate and the glycidyl ester of versatic acid, and the reaction product of hydroxypropyl(meth)acrylate and the glycidyl ester of versatic acid. The glycidyl ester of versatic acid is available as Cardura^{™} Resin E-10 from Resolution Performance Products, Houston, TX. Mixtures of such hydroxyl group-containing monomers can be used. Nonlimiting suitable examples of the compound of (iii) may include dimethylol proprionic acid, and/or 12-hydroxy stearic acid.

The polyisocyanate (iv) may be an aliphatic polyisocyanate, an aromatic polyisocyanate, or mixtures thereof. Examples of polyisocyanates that may be used as polyisocyanate (iv) include, but are not limited to, isophorone diisocyanate, 4,4'-diphenylmethane diisocyanate, 1,3-phenylene diisocyanate, 1,4-phenylene diisocyanate, tolylene diisocyanate, 1,4-tetramethylene diisocyanate, 1,6-hexamethylene diisocyanate, 1,4-cyclohexyl diisocyanate, alpha, alpha-xylylene diisocyanate, 4,4'-methylenebis(cyclohexyl isocyanate), 1,2,4-benzene triisocyanate, and polymethylene polyphenyl isocyanate. Mixtures of such polyisocyanates also can be used.

The hydrophobic polymerizable ethylenically unsaturated monomers (B) may be any suitable hydrophobic polymerizable ethylenically unsaturated monomers. As used herein, by "hydrophobic monomer", is meant a monomer that is "substantially insoluble" in water. By "substantially insoluble" in water what is meant is that a monomer has a solubility in distilled water of less than 6g/100g at 25°C determined by placing 3g of water and 0.18g of monomer in a test tube at 25°C and shaking the test tube. On visual examination, if two distinct layers form, the monomer is considered to be hydrophobic. If a cloudy solution forms, the turbidity of the mixture is measured using a turbidimeter or nephelometer (for example, Hach Model 2100AN, Hach Company, Loveland, CO). A reading of greater than 10 nephelometric turbidity units (NTU) indicates that the monomer is considered to be hydrophobic. Examples of suitable hydrophobic monomers include, but are not limited to, methyl(meth)acrylate, ethyl(meth)acrylate, propyl(meth)acrylate, N-butyl(meth)acrylate,t-butyl(meth)acrylate, 2-ethylhexyl(meth)acrylate, isobomyl (meth)acrylate, glycidyl (meth)acrylate, N-butoxy methyl (meth)acrylamide, styrene, (meth)acrylonitrile, lauryl (meth)acrylate, cyclohexyl (meth)acrylate, and 3,3,5-trimethylcyclohexyl (meth)acrylate. Mixtures of such hydrophobic monomers also can be used.

The crosslinking monomer (C) has two or more sites of polymerizable ethylenic unsaturation. Any suitable crosslinking monomer may be used to prepare the polyurethane-acrylate particles of the present aqueous polyurethane dispersion. For example, suitable crosslinking monomers include, but are not limited to, ethylene glycol di(meth)acrylate, triethylene glycol di(meth)acrylate, tetraethylene glycol di(meth)acrylate, 1,3-butylene glycol di(meth)acrylate, trimethylolpropane tri(meth)acrylate, 1,4-butanediol di(meth)acrylate, neopentyl glycol di(meth)acrylate, 1,6-hexanediol di(meth)acrylate, pentaerythritol di(meth)acrylate, pentaerythritol tri(meth)acrylate, pentaerythritol tetra(meth)acrylate, glycerol di(meth)acrylate, glycerol allyloxy di(meth)acrylate, 1,1,1-tris(hydroxymethyl)ethane di(meth)acrylate, 1,1,1-tris(hydroxymethyl)ethane tri(meth)acrylate, 1,1,1-tris(hydroxymethyl)propane di(meth)acrylate, 1,1,1-tris(hydroxymethyl)propane tri(meth)acrylate, triallyl cyanurate, triallyl isocyanurate, triallyl trimellitate, diallyl phthalate, diallyl terephthalate, divinyl benzene, methylol (meth)acrylamide, triallylamine, and methylenebis (meth) acrylamide. Mixtures of such crosslinking monomers also can be used.

As those skilled in the art of polymer science can appreciate, the incorporation of the various components of the active hydrogen-containing polyurethane acrylate prepolymer can occur in a statistically predictable manner. In preparing the active hydrogen-containing polyurethane acrylate prepolymer, an excess of hydroxyl functionality from compounds (i), (ii) and (iii) is present relative to isocyanate functionality from the polyisocyanate of (iv). This results in the formation of polymer molecules having end groups having hydroxyl functionality from (i) or (iii), and/or an end group containing a polymerizable ethylenically unsaturated group from (ii). The distribution and amount of the carboxylic group of the compound of (iii) on the resulting polyurethane acrylate prepolymer determines the hydrophobic-hydrophilic balance of the prepolymer.

A statistical distribution of three types of prepolymer molecules can result from the preparation of the polyurethane acrylate prepolymer. One type of prepolymer that can be formed is a first surfactant-like prepolymer, which has a hydroxyl and/or carboxylic functional group at one end of the prepolymer and a polymerizable ethylenically unsaturated group at the opposite end of the prepolymer. Additionally, a second surfactant-like prepolymer can result, which has a hydroxyl and/or carboxylic functional group at both ends of the prepolymer. Another type of prepolymer that can result is a hydrophobic prepolymer that does not contain any carboxylic acid groups, which has polymerizable ethylenically unsaturated groups at both ends of the prepolymer molecule.

It should be understood that for the purposes of the present invention, the reaction product (A) is considered to be a mixture of the aforementioned three types of prepolymers as well as any unreacted portions of components (i), (ii), (iii) and (iv) and any reaction by-products.

During the preparation of the aqueous polyurethane dispersion, the hydrophobic polymerizable ethylenically unsaturated monomers (B) and the crosslinking monomer (C) are added to the active hydrogen-containing polyurethane acrylate prepolymer (A) and passed through a high shear fluid processor for deagglomeration and dispersion of uniform submicron particles, resulting in a stable emulsion or dispersion. Suitable processors include, but are not limited to those sold under the trade name Microfluidizer^{®}, available from the Microfluidics^{™} division of MFIC Corporation, Newton, MA. The submicron particles that are formed contain the monomers (B) and (C) and the various prepolymers (A) as described above.

A further embodiment of the present invention is directed to a thermosetting composition comprising:
(I) a first reactant comprising reactive functional groups;
(II) a curing agent comprising functional groups reactive with the functional groups of the first reactant (I);
(III) a latex emulsion of crosslinked polymeric microparticles dispersed in an aqueous continuous phase as described in detail above; and
(IV) a polymer comprising (i) a C₈ to C₂₀ alkyl ester of (meth)acrylic acid; (ii) a polymerizable ethylenically unsaturated monomer comprising a polar functional group; and (iii) optionally, a polymerizable ethylenically unsaturated monomer, wherein (i), (ii) and (iii) are different from each other; and wherein the polymer has a glass transition temperature of no more than -10°C, as described in detail above.

The thermosetting composition may be in any suitable physical form, for example in liquid form, such as a solution, dispersion or emulsions, and in solid form, for example, a dry, particulate powder. In a particular embodiment of the present invention, the thermosetting composition is a coating composition.

In the thermosetting composition of the present invention, the first reactant (I) can include any suitable reactive functional groups. For example, the functional groups can comprise one or more of epoxy, carboxylic acid, hydroxy, amide, oxazoline, aceto acetate, isocyanate, methylol, amino, methylol ether, and carbamate. Likewise, the functional groups of the curing agent (II) can include any suitable reactive functional groups, provided such groups are reactive with those of the first reactant (I). For example, the functional groups of the curing agent (II) can comprise one or more of epoxy, carboxylic acid, hydroxy, isocyanate, capped isocyanate, amine, methylol, methylol ether, and beta-hydroxyalkylamide. Generally, the functional groups of (I) and (II) will be different from and reactive with each other.

Examples of the first reactant (I) which are suitable for use in the thermosetting compositions of the present invention include, but are not limited to, film-forming polymers with at least one reactive functional group such as those discussed immediately above with respect to the first reactant (I). Such polymers can include any of a variety of functional polymers known in the art. For example, suitable hydroxyl group-containing polymers can include acrylic polyols, polyester polyols, polyurethane polyols, polyether polyols, and mixtures thereof. Examples of other suitable film-forming polymers with at least one functional group include those described in U.S. Application Serial No. 10/126,903 filed April 19, 2002, entitled "Coating Compositions Containing Polyurethane Dispersions And Highly Crosslinked Polymer Particles," which is hereby incorporated by reference. When desired, appropriate mixtures of film-forming polymers may be used as the first reactant (I).

As aforementioned, in addition to the first reactant (I), the latex emulsion of crosslinked polymeric microparticles (III), and the polymer (IV), the thermosetting composition of the present invention further includes a curing agent (II) having functional groups reactive with the functional groups of the first reactant (I).

Dependent upon the reactive functional groups of the first reactant (I), the curing agent (II) can be selected from an aminoplast resin, a polyisocyanate, a blocked isocyanate, a polyepoxide, a polyacid, an anhydride, an amine, a polyol, a carboxylic acid, an hydroxy containing compound, a methylol containing compound, a methylol ether containing compound, a beta-hydroxyalkylamide, and mixtures of any of the foregoing.

Examples of curing agents suitable for use in the compositions of the present invention are described in U.S. Application Ser. No. 10/126,903, filed April 19, 2002, entitled "Coating Compositions Containing Polyurethane Dispersions And Highly Crosslinked Polymer Particles,"

In certain embodiments of the present invention, the latex emulsion of crosslinked microparticles (III) has functional groups reactive with the functional groups of the curing agent (II). The latex emulsion (III) can include any suitable reactive functional groups, provided such groups are reactive with those of the curing agent (II).

When desired, appropriate mixtures of curing agents may be used. It should be mentioned that the thermosetting compositions can be formulated as a one-component composition where a curing agent such as an aminoplast resin and/or a blocked isocyanate compound such as those described above is admixed with other composition components. The one-component composition can be storage stable as formulated. Alternatively, the thermosetting composition can be formulated as a two-component composition where a polyisocyanate curing agent such as those described above can be added to a pre-formed admixture of the other composition components just prior to application. The pre-formed admixture can comprise curing agents such as aminoplast resins and/or blocked isocyanate compounds such as those described above.

It would be understood by those skilled in the art that the amount of first reactant (I) and curing agent (II) suitable for use in the present compositions depends on the curing conditions of the coating as well as desired properties of the cured coating.

In a particular embodiment of the present invention, the thermosetting composition comprises the following components:
(I) a first reactant comprising reactive functional groups;
(II) a curing agent having at least two functional groups reactive with the functional groups of the first reactant in (a); and
(III) a latex emulsion of seeded polymeric microparticles described above; and
(IV) a polymer comprising (i) a C₈ to C₂₀ alkyl ester of (meth)acrylic acid; (ii) a polymerizable ethylenically unsaturated monomer comprising a. polar functional group; and (iii) optionally, a polymerizable ethylenically unsaturated monomer, wherein (i), (ii) and (iii) are different from each other; and wherein the polymer has a glass transition temperature of no more than -10°C described in detail above.

In another embodiment of the present invention, the thermosetting coating composition is a basecoat composition that may include one or more effect pigments. Nonlimiting examples of suitable effect pigments include, for example, metallic pigments such as aluminum flake and copper bronze flake, and micaceous pigments, for example, metal oxide coated mica. In an embodiment of the present invention the thermosetting coating composition can provide improved flake orientation of metallic or micaceous pigments, resulting in improved coating appearance and enhanced Flop Index ratings as described below. The level of effect pigments present in the thermosetting composition of the present invention can vary dependent upon the other composition components, the desired color, and/or the end use of substrate to be coated.

Besides the metallic pigments, the basecoat compositions can contain nonmetallic color and/or filler pigments conventionally used in surface coatings such as, for example, inorganic pigments such as titanium dioxide, iron oxide, chromium oxide, lead chromate, and carbon black; and organic pigments such as phthalocyanine blue and phthalocyanine green.

Optional ingredients in the basecoat composition can comprise those which are well known in the art of formulating surface coatings, and can comprise surface active agents, flow control agents, thixotropic agents, fillers, anti-gassing agents, organic co-solvents, catalysts, and other customary adjuvants. Nonlimiting examples of these materials and suitable amounts are described in U.S. Patent Nos. 4,220,679; 4,403,003; 4,147,769; and 5,071,904.

In a particular embodiment of the present invention, the thermosetting composition further comprises an aqueous polyurethane dispersion in addition to components (I), (II), (III) and (IV). The inclusion of polyurethane dispersions in aqueous coating compositions for improving smoothness, flow and leveling of the coating film is known in the art. Any suitable polyurethane dispersion may be used in the present thermosetting composition. Examples of suitable polyurethane dispersions include, but are not limited to, those disclosed in U.S. Patent No. 5,071,904 to Martin et al. (col. 4, line 40 to col. 9, line 8); U.S. Patent No. 6,291,564 to Faler et al. (col. 3, line 32 to col. 4, line 52); U.S. Patent No. 6,281,272 to Baldy et al. (col. 15, lines 52-66, see Table 1 footnote 9); U.S. Patent No. 4,880,867 to Gob et al. (col. 7, line 29 to col. 12, line 68); and U.S. Patent No. 6,025,031 to Lettmann et al. (col. 6, lines 30 to 43)

The polyurethane dispersion is present in the thermosetting coating composition of the present invention in an amount sufficient to provide a smooth cured coating as measured using a Byk Gardner wave scan instrument. See https://byk- gardnerusa.com/html/Byk/references/Applications/Application 4/application 4.h. For purposes of the present invention, the shortwave values correlate to the surface smoothness of a basecoat in a basecoat/clearcoat system.

Another embodiment of the present invention is directed to a coated substrate comprising:
(a) a substrate, and
(b) any of the coating compositions described above over at least a portion of the substrate. The substrate can comprise any of a variety of known substrates such as metallic, polymeric, elastomeric, glass, wood, paper and other cellulosic substrates. In one embodiment, the substrate comprises a metallic substrate.

The coating composition can be applied to the substrate by any conventional coating technique such as brushing, rolling, spraying, dipping, or flowing. Spray techniques and equipment for air spraying, airless spray, and electrostatic spraying in either manual or automatic methods known in the art can be used.

During application of the coating composition to the substrate, the film thickness of the coating formed on the substrate can range from 0.1 to 5 mils (2.54 to 127 micrometers). In another embodiment, the film thickness of the coating formed on the substrate can range 0.1 to 1 mils (2.54 to 25.4 micrometers), and can be 0.4 to 0.6 mils (10.2 to 15.2 micrometers). The coated substrate can be heated to a temperature and for a time sufficient to effect cure of the thermosetting composition applied thereto.

In another embodiment of the present invention, the composition is cured at ambient conditions.

Another embodiment of the present invention is directed to a method of repairing a defect in a multi-layer coating comprising:
(A) applying a first base coating composition over at least a portion of a substrate to form a first base coating layer thereover, the base coating composition comprising:
   (I) a latex emulsion comprising crosslinked polymeric microparticles dispersed in an aqueous continuous phase, the polymeric microparticles prepared from a monomer mix comprising:
      (a) at least 20 weight percent of a crosslinking monomer having two or more groups of reactive unsaturation and/or a monomer having a functional group capable of reacting to form crosslinks after polymerization;
      (b) at least 2 weight percent of a polymerizable ethylenically unsaturated monomer having hydrophilic functional groups having the following structures (I) or (II): 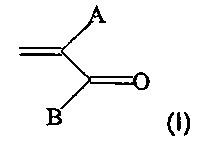 or 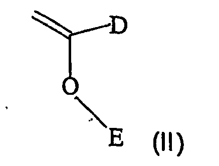 wherein A represents H or C₁-C₃ alkyl; B represents - NR¹R², -OR³ or -SR⁴, where R¹ and R² are independently H, C₁-C₁₈ alkyl, C₁-C₁₈ alkylol or C₁-C₁₈ alkylamino, R³ and R⁴ are independently C₁-C₁₈ alkylol, C₁-C₁₈ alkylamino, -CH₂CH₂-(OCH₂CH₂)ₙ-OH where n is 0 to 30, or , - CH₂CH₂-(OC(CH₃)HCH₂)ₘ-OH where m is 0 to 30, D represents H or C₁-C₃ alkyl; and E represents -CH₂CHOHCH₂OH, C₁-C₁₈ alkylol, -CH₂CH₂- . (OCH₂CH₂)ₙ-OH where n is 0 to 30, or -CH₂CH₂-(OC(CH₃)HCH₂)ₘ-OH where m is 0 to 30; and
      (c) optionally, the balance comprised of a polymerizable ethylenically unsaturated monomer, wherein (a), (b) and (c) are different from each other; and
         (II) a polymer comprising:
         (i) a C₈ to C₂₀ alkyl ester of (meth)acrylic acid;
         (ii) a polymerizable ethylenically unsaturated monomer comprising a polar functional group; and
         (iii) optionally, a polymerizable ethylenically unsaturated monomer, wherein (i), (ii) and (iii) are different from each other;
            wherein the polymer has a glass transition temperature of no more than -10°C;
(B) optionally, heating the first base coating layer at a temperature within the range of 160°F to 180°F (71°C to 82°C).
(C) applying a first topcoat composition over at least a portion of the first base coating layer to form a first topcoat layer thereover;
(D) heating the first topcoat layer typically at a temperature within the range of 250°F to 300°F (121°C to 149°C), to form a cured multi-layer coating on the substrate, wherein the cured multi-layer coating comprises a coating defect;
(E) removing the coating defect;
(F) applying a second base coating composition which can be the same or different from the first base coating composition over at least a portion of the coated substrate of (D) to form a second base coating layer thereover;
(G) optionally, heating the coated substrate of (F) at a temperature within the range of 160°F to 180°F (71°C to 82°C)
(H) applying a second topcoat composition over at least a portion of the second base coating layer to form a second topcoat layer thereover; and
(I) heating the coated substrate of (H) at a temperature within the range of 180°F to 200°F (82°C to 93°C).

The first base coating composition may include a pigmented basecoat composition. The first base coating layer can be fully cured or alternatively given a drying step in which solvent is driven out of the film by heating or an air drying period before application of the second coating layer. Suitable drying conditions may depend on the particular coating composition, and on the ambient humidity, but a drying time from 1 to 15 minutes at a temperature within the range of 70°F to 200°F (21 °C to 93°C), or within the range of 160°F to 180°F (71°C to 82°C), can be adequate.

The first topcoat layer, which may include a substantially pigment-free (or clear) coating composition, can be applied to the first base coating layer by any conventional coating technique as described above, including, but not limited to, compressed air spraying, electrostatic spraying, and either manual or automatic methods. The first topcoat layer can be applied directly to the first base coating layer prior to drying or curing thereof; or to a dried first base coating layer, or to a cured first base coating layer. The two coatings can be heated to cure both coating layers simultaneously, i.e. to form a cured multi-layer coating. Typical curing temperatures are within the range of 50°F to 475°F (10°C to 246°C), or within the range of 250°F to 300°F (121 °C to 149°C) for 1 to 30 minutes. The thickness (dry film thickness) of the first topcoat layer can range from 1 to 6 mils (25 to 150 micrometers).

When a defect is present in the cured multi-layer coating, the defect may be removed by any suitable method, such as by sanding, followed by re-application of one or more coating layers, the first and second base coating layers can be deposited from any of the coating compositions of the present invention. The first and second base coating compositions can be the same or different. Suitable drying conditions may depend on the particular coating composition, and on the ambient humidity, but a drying time from 1 to 15 minutes at a temperature within the range of 70°F to 200°F (21 °C to 93°C), or within the range of 160°F to 180°F (71°C to 82°C), can be adequate.

The first and second topcoat layers may be formed from the same or different topcoat composition. A second topcoat layer may be applied over at least a portion of the second base coating layer and, optionally, over any of the previously applied layers. In one embodiment, the second topcoat layer is different from the first topcoat layer. The second topcoat layer can be applied directly to the second base coating layer prior to drying or curing thereof; or to a dried second base coating layer, or to a cured second base coating layer. The two coatings can be heated to cure both coating layers simultaneously, i.e. to form a cured multi-layer coating. The second topcoat layer may be heated at a temperature within the range of 180°F to 200°F (82°C to 93°C) for 30 to 45 minutes to effect cure. Alternatively, the second topcoat layer can be cured at room temperature. The thickness (dry film thickness) of the second topcoat layer can range from 1 to 6 mils (25 to 150 micrometers).

In another embodiment of the present invention, a second substantially pigment free topcoat composition can be applied directly to the first topcoat layer to form a "clear-on-clear" topcoat. The first topcoat coating composition can be applied over the first base coating layer as described above. The second topcoat coating composition which may be the same or different from the first topcoat composition can be applied to a cured or to a dried first topcoat before the first basecoat layer and first topcoat layer have been cured. The first base coating layer, the first topcoat layer and the second topcoat layer,can then be heated to cure the three coatings simultaneously.

In one embodiment of the present invention, the base coating composition used to form the first base coating layer (and/or the second base coating composition used to form the second base coating layer), contains metallic or reflective pigments as are known in the art for use in color coats of the so-called color-plus-clear systems. These are the so-called "glamour finishes" whereby a differential light reflection effect, dependent upon the viewing angle, is achieved. This "flip-flop" effect can be attributed to the proper orientation (i.e., alignment parallel to the substrate surface) of the metallic and/or other reflective pigment in the base coating layer. Appearance properties such as gloss and distinctness of image, and smoothness, for the most part, can be attributed to the unpigmented topcoat (i.e., the clearcoat). The basecoat composition, which contains metallic and/or other reflective pigments, is formulated to maximize the "flip-flop" effect; and the top coating composition, which is substantially pigment-free, is formulated to maximize appearance properties such as gloss.

The above-described pigmented film-forming compositions are storage stable compositions which provide multi-layer composite coatings suitable for automotive color-plus-clear applications. The reflective pigment- containing base coats exhibit excellent "flip-flop" effect and excellent water resistance and appearance properties.

The coating composition of the present invention, when used as a metallic base coat composition, provides excellent metallic flake orientation as measured by Flop Index and include primarily HAPS compliant solvents. Further, the coatings derived from the present basecoat composition can be used with a wide variety of clearcoat chemistries and are able to maintain good metallic appearance by minimizing soak in or strike in. Also the coating compositions exhibit improved blistering resistance and interlayer adhesion properities.

As mentioned above, the multilayer composite coatings of the present invention can comprise two or more transparent topcoats applied over the base coat layer. It should be understood that when employed, the second transparent topcoat and the first transparent topcoat coating compositions can be the same or different provided that, when applied wet-on-wet, one topcoat does not substantially interfere with the curing of the other for example by inhibiting solvent/water evaporation from a lower layer. Moreover, the first topcoat, the second topcoat or both can be the coating composition of the present invention. Alternatively, only one of the first topcoat and the second topcoat is formed from the curable coating composition of the present invention.

In this instance, the topcoat that does not comprise the coating composition of the present invention can include any of the art recognized crosslinkable coating compositions comprising at least one coating material and at least one curing agent.

It should be mentioned that the coating compositions of the present invention can be advantageously formulated as a "monocoat", that is, a coating which forms essentially one coating layer when applied to a substrate. The monocoat coating composition can be pigmented. Nonlimiting examples of suitable pigments can include any of those mentioned above. When employed as a monocoat, the coating compositions of the present invention can be applied (by any of the conventional application techniques discussed above) in two or more successive coats, and, in certain instances can be applied with only an ambient flash period between coats. The multi-coats when cured can form essentially one coating layer.

In an additional embodiment of the present invention, the coating composition described above can be present as a resinous phase dispersed in an aqueous phase. In this form, the coating composition can be used in a method of electrocoating a conductive substrate. In this method of electrocoating a conductive substrate serves as an electrode in an electrical circuit comprising an electrode and a counter electrode, the substrate being immersed in the composition thermosetting. The method includes passing electric current between the cathode and the anode to cause deposition of the electrocoating composition on the substrate as a substantially continuous film. The present invention is also directed to a substrate coated using the above-described method.

When the present coating composition is used in an electrocoating operation, the first reactant having reactive functional groups and/or the curing agent may additional include an ionic or salt group. The ionic group may be cationic or anionic. When the ionic group is cationic, it may be, for example, one or more of amine salts, quaternary ammonium and quaternary sulfonium groups. The cationic salt group may be derived from an epoxy group-containing monomer which after polymerization has been post-reacted with an amine salt or an amine and acid.

The present invention will further be described by reference to the following examples. The following examples are merely illustrative of the invention and are not intended to be limiting. All quantities, percentages and ratios are on a weight basis unless otherwise indicated.

### EXAMPLES

### POLYMER EXAMPLE A

This example describes the preparation of a polyester polymer used as a component in the coating compositions of the present invention. The polyester was prepared from the following ingredients as described below.

| INGREDIENTS | PARTS BY WEIGHT (grams) |
|---|---|
| EMPOL 1008¹ | 4206.3 |
| Cyclohexyldimethanol | 1100.5 |
| Dimethanolpropionic acid | 301.5 |
| Trimellitic anhydride | 150.0 |
| Butyl ether of propylene glycol | 2241.7 |

| | |
|---|---|
| ¹A dimerdiacid available from Cognis. | |

The polyester polymer was prepared in a four-neck round bottom flask equipped with a thermometer, mechanical stirrer, condenser, dry nitrogen sparge and a heating mantle. The first four ingredients were heated to a temperature of 180°C and stirred in the flask until 257 grams of distillate was collected and the acid value dropped to the range of 22-25. The material was then cooled to a temperature of 130°C and the butyl ether of propylene glycol was added.

The final product was a liquid having Gardner-Holdt viscosity of Z5-Z6, a non-volatile content of 71.1 % (as measured at 110°C for one hour), and a weight average molecular weight of 23,125 as measured by gel permeation chromatography using polystyrene standards.

### POLYMER EXAMPLE B

This example describes the preparation of an aqueous polyurethane dispersion containing polyurethane acrylate particles dispersed in an aqueous medium of the present invention.

### PREPARATION OF AN ACTIVE HYDROGEN-CONTAINING POLYURETHANE ACRYLATE PREPOLYMER

A latex containing a hydrophilic polyurethane prepolymer was prepared by adding 313.3g of N-methyl pyrrolidine; 234.4 g of hydroxyethyl methacrylate; 241.5 g of dimethylol proprionic acid; 2.3g of 2,6-Di-tert-butyl 4-methyl phenol; 2.3g of triphenyl phosphate; and 2.3g of dibutyl tin dilaurate to a four necked round bottom flask fitted with a thermocouple, mechanical stirrer, and condenser and heated to 100°C in to obtain a homogeneous solution. Then 1200.0g of polytetrahydrofuran (molecular weight 1000) was added. To this mixture at 90 to 100°C, 666.9g isophorone diisocyanate was added over 90 minutes. The isocyanate container was rinsed with 153.0g of butyl acrylate. The reaction mixture was stirred at 90°C until all the isocyanate groups were reacted. Then 1100.0g of butyl acrylate was added and cooled to ambient temperature.

Based on the ratios of monomers used, the theoretical distribution of compositions for this prepolymer is 25% diol (second surfactant-like prepolymer), 25% diacrylate (hydrophobic prepolymer), and 50% monofunctional in hydroxyl and acrylate (second surfactant-like prepolymer).

### PREPARATION OF AN AQUEOUS POLYURETHANE DISPERSION

An aqueous polyurethane dispersion was prepared as described below from the following ingredients:

| INGREDIENTS | PARTS BY WEIGHT (grams) |
|---|---|
| CHARGE 1 | |
| Distilled Water | 13320.0 |
| Igepal CO-897² | 171.4 |
| Diisopropanolamine | 360.0 |
| Polyurethane prepolymer | 8000.0 |
| (described above) | |
| Ethyleneglycol dimethacrylate | 360.0 |
| Methyl methacrylate | 2280.0 |
| Butylacrylate | 2000.0 |

| FEED 1 | |
|---|---|
| Distilled water | 480.0 |
| t-Butyl hydroperoxide | 12.0 |

| FEED 2 | |
|---|---|
| Distilled water | 480.0 |
| Ferrous ammonium sulfate | 0.24 |
| Sodium metabisulfite | 12.0 |

| FEED 3 | |
|---|---|
| Distilled water | 48.0 |
| Proxel GXL³ | 24.0 |

| | |
|---|---|
| ² Nonionic surfactant, 70% in water, available from RHODIA, Paris, France, ³ Biocide containing 9.3% 1,2-Benzisothiazolin-3-one as active Ingredient, available from Syngenta Corporation, Wilmington, DE. | |

Charge 1 was mixed in a stainless steel beaker until homogeneous and the mixture was microfluidized, by passing once through a Microfluidizer^{®} M110T (Microfluidics^{™} division of MFIC Corporation, Newton, MA) at 8000 psi into a stainless steel beaker and rinsed with 600 g of water. The microfluidized mixture was transferred to a round bottom flask fitted with a thermometer, mechanical stirrer, and condenser, sparged with nitrogen gas. Feed 1 was added to the flask and stirred for one minute. Then, Feed 2 was added to the flask over 30 minutes, an exothermic reaction was observed. The polymer was cooled to 30°C and Feed 3 was added.

The final product was 40% solids by weight (as measured at 110°C for one hour) and had a pH within the range of 7.5 to 9.0.

### POLYMER EXAMPLE C

The following example describes the preparation of a latex emulsion containing crosslinked polymeric microparticles of the present invention. The aqueous dispersion was prepared as described below from the following ingredients. Amounts listed below indicate parts by weight (grams) unless otherwise noted.

| INGREDIENTS | PARTS BY WEIGHT (grams) |
|---|---|
| Charge 1 | |
| Deionized Water | 991,8 |
| Dioctyl sulfausuccinate⁴ | 1.5 |
| Feed A | |
| Methyl Methacrylate | 15.6 |
| Butyl acrylate | 8.2 |
| Ethylene glycol dimethacrylate | 12.0 |

| Feed B | |
|---|---|
| Deionized water | 39.2 |
| 4,4'-Azobis (4-cyanopentanoic acid) | 4.0 |
| Dimethylethanol amine | 3.6 |

| Feed C | |
|---|---|
| Methyl methacrylate | 296.4 |
| Butyl acrylate | 279.9 |
| Ethylene glycol dimethacrylate | 222.4 |
| Acrylamide (50% by weight in water) | 155.6 |
| Deionized water | 668.6 |
| Ethoxylated nonylphenol ammonium sulfate⁵ | 8.1 |

| Feed D | |
|---|---|
| Deionized water | 247.6 |
| 4,4'-Azobis (4-cyanopentanoic acid) | 4.0 |
| Dimethylethanol amine | 3.6 |
| Feed E | |
| Biocide⁶ | 3.3 |
| Deionized water | 1.5 |

| | |
|---|---|
| ⁴Anionic surfactant, available as AOT-75 from Cytec Industries, Inc. ⁵ Anionic surfactant, available as Alipal CO-436 from GAF. ⁶Proxel GXL from Avecia Chemicals. | |

Charge 1 was added to a reactor fitted with thermocouple, agitator, and reflux condenser. The contents of the reactor were heated to a temperature of 83°C at which time Feed A was added over a one (1) minute period, followed by a hold period of two (2) minutes. Feed B was then added over a one (1) minute period and the contents of the flask were held at a temperature of 83°C for a period of 10 minutes. Feed C was then added over a 120-minute period. Approximately 10 minutes after the start of the Feed C addition, Feed D was added over a 120-minute period. Upon completion of the addition of Feed D, the reaction mixture was held at a temperature of 83°C for 60 minutes, followed by cooling of the reaction product to ambient temperature. At ambient temperature Feed E was then added.

The final product was 30% solids by weight (as measured at 110°C for one hour) and had a particle size of 0.1 micron (as measured using a Horiba LA-900 Laser Scattering Particle Size Distribution Analyzer, available from Horiba Instruments, Irvine, California).

### POLYMER EXAMPLE D

The polymer of Example D was prepared as described below from the following ingredients:

| INGREDIENTS | PARTS BY WEIGHT (grams) |
|---|---|
| Charge 1 | |
| Methyl Isobutyl Ketone | 340.0 |
| | |

| Feed 1 | |
|---|---|
| Lauryl Methacrylate | 2082.0 |
| Methacrylic Acid | 42.1 |
| | |

| Feed 2 | |
|---|---|
| t-Amyl peroxy-2-ethylhexanoate | 97.2 |
| Methyl Isobutyl Ketone | 151.9 |
| | |

| Feed 3 | |
|---|---|
| Butyl acrylate | 165.6 |
| Methyl Isobutyl Ketone | 10.0 |
| | |

| Feed 4 | |
|---|---|
| t-Amyl Peroxy-2-ethylhexanoate | 15.6 |
| Methyl Isobutyl Ketone | 120.0 |
| | |

| Feed 5 | |
|---|---|
| Mono butyl ether of propylene glycol | 359.4 |
| Dimethyl ethanol amine | 48.6 |
| | |

Charge 1 was added to a four-necked round bottom flask fitted with a thermocouple, mechanical stirrer, and condenser and heated to reflux. At this temperature, Feed 1 was added over 180 minutes. Fifteen minutes after the start of Feed 1, Feed 2 was added over 210 minutes. After a hold of 45 minutes, Feed 4 was added over 120 minutes. Fifteen minutes later, Feed 3 was added over 90 minutes. Then, the mixture was held for one hour, and Feed 5 was added while cooling the mixture to ambient temperature.:

The final product was 70% solids by weight (as measured at 110°C for one hour). The theoretical Tg (glass transition temperature) of this polymer was -62°C, calculated according to the equation described on page 29 in The Chemistry of Organic Film Former by D.H. Solomon, Wiley and Sons, 1967.

### EXAMPLE 1

Two silver waterborne basecoat coating samples (Sample 1 and Sample 2) were prepared using the components listed in Table 1 below. Weights of all components are listed in grams. The "Premix Portion" was first prepared with all materials added under agitation in the order listed in Table 1. Then the "Basecoat Portion" was prepared using the "Premix Portion" at the amounts indicated by Table 1. Sample 1 was prepared without the polymer of Example D. Sample 2 was prepared with the polymer of Example D.

**TABLE 1**

| | Sample 1 | Sample 2 |
|---|---|---|
| | (grams) | (grams) |
| COMPONENT | | |
| **"Premix Portion"** | | |
| Aluminum Paste⁷ | 26.45 | 26.45 |
| Ethylene Glycol Monohexyl ether | 11.50 | 11.50 |
| Propylene Glycol Monobutyl ether | 13.50 | 13.50 |
| Aluminum Passivator⁸ | 8.04 | 8.04 |
| CYMEL^{®} 327 | 21.71 | 21.71 |
| Polymer Example D | ---- | 14.20 |
| | | |
| | Sample 1 | Sample 2 |

| **"Basecoat Portion"** | | |
|---|---|---|
| Deionized water | 61.10 | 61.10 |
| 50% aqueous dimethyl ethanol amine (by weight) | 1.22 | 1.22 |
| Polymer Example A | 25.76 | 25.76 |
| Polymer Example B | 54.79 | 54.79 |
| Cymel^{®} 327 | 14.93 | 3.82 |
| Polymer Example C | 75.90 | 75.90 |
| Ethylene glycol monohexyl ether | 4.11 | 4.11 |
| Propylene glycol monobutyl ether | 8.44 | 8.44 |
| Mineral Spirits⁹ | 7.55 | 7.55 |
| 50% aqueous dimethyl ethanol amine (by weight) | 0.70 | 0.70 |
| Laponite Solution¹⁰ | 46.97 | 46.97 |
| Acrysol ASE-60 Solution¹¹ | 12.00 | 12.00 |
| Premix Portion (from above) | 81.21 | 95.41 |
| Polypropylene glycol | 5.44 | 5.44 |
| Deionized water | 113.10 | 126.80 |
| 50% aqueous dimethyl ethanol amine (by weight) | 2.75 | 1,60 - |
| *Total* | *607.32* | *519.91* |

| | | |
|---|---|---|
| ⁷ Pigment paste of a 1:1 w/w ratio of Sparkle Silver 5271-AR and Alpate Miraglow 7670-NS. ⁸ A 60 / 36 / 4 w/w solution of LUBRIZOL 2062/diisopropanolamine/propylene glycol butyl ether LUBRIZOL 2062 is available from the Lubrizol Co., Cleveland, OH. ⁹ Mineral Spirits available from Shell Chemical Co., Houston, TX. ¹⁰A 2% (w/w) aqueous solution of Laponite RD, available from Southern Clay Products, Gonzales, Texas. ¹¹Acrylic thickener 1:1 (w/w) aqueous solution available from Rohm and Haas, Philadelphia, PA. | | |

### EXAMPLE 2

Two mica-containing silver waterborne basecoat coating samples (Sample 3 and Sample 4) were prepared using the components listed in Table 2 below. All components are listed in grams. The "Premix Portion" was first prepared with all materials added under agitation in the order listed in Table 2. Then the "Basecoat Portion" was prepared using the "Premix Portion" at the amounts indicated by Table 2. Sample 3 was prepared without the polymer of Example D. Sample 4 was prepared with the polymer of Example D.

**TABLE 2**

| | Sample 3 | Sample 4 |
|---|---|---|
| | (grams) | (grams) |
| COMPONENT | | |
| **"Premix Portion"** | | |
| Aluminum Paste¹² | 17.97 | 17.97 |
| Mica¹³ | 0.35 | 0.35 |
| Ethylene Glycol Monohexyl ether | 8.62 | 8.62 |
| Propylene Glycol Monobutyl ether | 10.12 | 10.12 |
| Aluminum Passivator¹⁴ | 6.03 | 6.03 |
| Polymer Example D | ---- | 8.40 |
| CYMEL^{®} 327 | 15.83 | 15.83 |
| | | |
| | Sample 3 | Sample 4 |

| **"Basecoat Portion"** | | |
|---|---|---|
| Deionized water | 61.10 | 61.10 |
| 50% aqueous dimethyl ethanol amine (by weight) | 1.22 | 1.22 |
| Polymer Example A | 36.36 | 36.36 |
| Polymer Example B | 50.74 | 50.74 |
| Cymel^{®} 327 | 11.11 | 11.11 |
| Polymer Example C | 74.19 | 74.19 |
| Ethylene glycol monohexyl ether | 4.11 | 4.11 |
| Propylene glycol monobutyl ether | 8.44 | 8.44 |
| Mineral Spirits | 7.55 | 7.55 |
| 50% aqueous dimethyl ethanol amine (by weight) | 0.84 | 0.84 |
| Laponite Solution¹⁵ | 46.97 | 46.97 |
| Acrysol ASE-60 Solution¹⁶ | 12.00 | 12.00 |
| Premix Portion (from above) | 58.92 | 67.32 |
| 2-ethyl hexanol | 5.16 | 5.16 |
| Polypropylene glycol | 5.00 | 5.00 |
| Deionized water | 151.30 | 118.00 |
| *Total* | *535.01* | *510.11* |

| | | |
|---|---|---|
| ¹² Pigment paste of a 5,86:10.13 w/w ratio of Stapa Metallux 2154 and Stapa Metallux R 875 ¹³ Iriodim 9505 Red Violet ¹⁴ A 60/36/4 w/w solution of LUBRIZOL 2062/diisopropanolamine/Propylene glycol Butyl ether. LUBRIZOL 2062 is available from the Lubrizol Co., Cleveland, OH. ¹⁵A 2% (w/w) aqueous solution of Laponite RD, available from Southern Clay Products, Gonzales, Texas. ¹⁶Acrylic thickener 1:1 (w/w) aqueous solution available from Rohm and Haas, Philadelphia, PA. | | |

### TEST PANEL PREPARATION

The viscosity of each coating composition (Samples 1 through 4) was reduced to a spray viscosity of 33 to 37 seconds (DIN #4 cup) with deionized water.

Samples 1 and 2 were each spray applied in a humidity and temperature controlled spray booth at 60% relative humidity ("RH") and 70°F (21°C) onto cold rolled steel substrates which had been previously electrocoated with ED5000 and primed with 1177225A gray primer (both products available commercially from PPG Industries, Inc.), the primed panels having been prepared by ACT Laboratories Inc., of Hillsdale MI. Each coating composition was spray-applied using the SATA LP90 gun with a MSB nozzle and 135 air cap.

Samples 1 and 2 were spray applied such that the dry or cured film thickness of each coating was in the range of 0.4 to 0.6 mils (10.2 to 15.2 micrometers) thickness. These coated test panels were allowed an ambient air flash period of 3 minutes at 70°F(21°C)/60%RH, followed by heating for 3 minutes at 176°F (80°C) to further dehydrate the coating.

After dehydration, a two-component clearcoat composition 74984/74985 (available from PPG Industries, Inc.) was mixed at a weight ratio of 3 to 1 and spray applied over the panels coated with Samples 1 and 2. This clearcoat was spray applied such that between 1.4 and 1.6 mils (35.6 to 40.6 micrometers) of dry clearcoat film thickness was achieved. Following application of this clearcoat, the coated test panels were allowed an ambient air flash of 10 minutes at 70°F(21°C)/60%RH, followed by heating for 30 minutes at 285°F (140°C). All panels were allowed to cure at ambient conditions (70°F(21°C)/60%RH) for an additional 24 hours.

Next, Samples 1 and 2 were re-applied to each of their respective coated panels. In other words, if the panel was originally coated with Sample 1, Sample 1 was re-applied to that same panel. Both Samples 1 and 2 were sprayed so that the dry or cured film thickness was in the range of 0.4 to 0.6 mils (10.2 to 15.2 micrometers) thickness.

All coated test panels were again allowed an ambient air flash period of 3 minutes at 70°F(21°C)/60%RH, followed by heating for 3 minutes at 176°F (80°C) to further dehydrate the coating. Next, a two-component clearcoat composition 74971/74972 (available from PPG Industries, Inc.) was mixed at a weight ratio of 2 to 1 and spray applied over the panels. This clearcoat was spray applied such that between 1.4 and 1.6 mils (35.6 to 40.6 micrometers) of dry clearcoat film thickness was achieved. Following application of this clearcoat, the coated test panels were allowed an ambient air flash of 10 minutes at 70°F(21 °C)/60%RH, followed by heating for 45 minutes at 185°F (85°C). All panels were allowed to cure at ambient conditions (70°F(21°C)/60%RH) for an additional 72 hours before testing.

Samples 3 and 4 were each spray applied in a humidity and temperature controlled spray booth at 60% relative humidity ("RH") and 70°F (21°C) onto cold rolled steel substrates which had been previously electrocoated with ED5000 and primed with 1177225A gray primer (both products available commercially from PPG Industries, Inc.), the primed panels having been prepared by ACT Laboratories Inc., of Hillsdale MI. Each coating composition was spray-applied using the SATA LP90 gun with a MSB nozzle and 135 air cap.

Samples 3 and 4 were spray applied such that the dry or cured film thickness of each coating was in the range of 0.4 to 0.6 mils (10.2 to 15.2 micrometers) thickness. These coated test panels were allowed an ambient air flash period of 3 minutes at 70°F(21°C)160%RH, followed by heating for 3 minutes at 176°F (80°C) to further dehydrate the coating.

After dehydration, a one-component clearcoat composition High Teck 97060 (available from PPG Industries, Inc.) was spray applied over the panels coated with Samples 3 and 4. This clearcoat was spray applied such that between 1.4 and 1.6 mils (35.6 to 40.6 micrometers) of dry clearcoat film thickness was achieved. Following application of this clearcoat, the coated test panels were allowed an ambient air flash of 10 minutes at 70°F(21°C)/60%RH. followed by heating for 30 minutes at 285°F (140°C). All panels were allowed to cure at ambient conditions (70°F(21°C)/60%RH) for an additional 72 hours before testing.

Panels coated with Samples 1 and 2 (including the repair process detailed above) were tested in humidity and evaluated for blistering. Panels coated with Samples 3 and 4 were tested in humidity and watersoak and evaluated for blistering and adhesion as described below.

**TABLE 3**

| BASECOAT | CLEARCOAT | Blistering¹⁷ after Humidity¹⁸ | Blistering¹⁷ after Water Soak¹⁹ | Adhesion²⁰ after Water Soak¹⁹ |
|---|---|---|---|---|
| Sample 1 | 74971/74972 | 8 | | |
| Sample 2 | 74971/74972 | 1 | | |
| Sample 3 | High Teck | | 7 | 3 |
| Sample 4 | High Teck | | 1 | 5 |

| | | | | |
|---|---|---|---|---|
| ¹⁷ Blistering was rated on a 1-10 scale; 1 = no blisters and 10 = very large and/or very dense blisters. ¹⁸ Humidity test is performed using a Chrysler Box cabinet at 100°C and 100% Relative Humidity for a 10 day duration. Panels were tested immediately unpon removal from the cabinet. ¹⁹ Water soak test is a water immersion test. Coated panels are immersed in 63°C water for 48 hours and then tested immediately upon removal from the water. ²⁰ Adhesion was performed according to ASTM D3359. The higher the number, the better the adhesion. | | | | |

## Claims

1. A coating composition comprising:
(I) a latex emulsion comprising crosslinked polymeric microparticles dispersed in an aqueous continuous phase, the polymeric microparticles prepared from a monomer mix comprising:
(a) at least 20 weight percent of a crosslinking monomer having two or more groups of reactive unsaturation and/or a monomer having a functional group capable of reacting to form crosslinks after polymerization;
(b) at least 2 weight percent of a polymerizable ethylenically unsaturated monomer having hydrophilic functional groups, the monomer having the following structure (I) or (II): 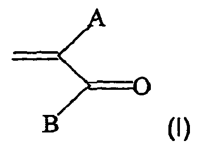 or 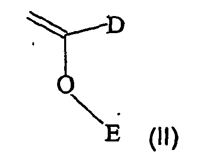 wherein A represents H or C₁-C₃ alkyl; B represents - NR¹R², -OR³ or -SR⁴, where R¹ and R² are independently H, C₁-C₁₈ alkyl, C₁-C₁₈ alkylol or C₁-C₁₈ alkylamino, R³ and R⁴ are independently C₁-C₁₈ alkylol, C₁-C₁₈ alkylamino, -CH₂CH₂-(OCH₂CH₂)ₙ-OH where n is 0 to 30, or, - CH₂CH₂-(OC(CH₃)HCH₂)ₘ-OH where m is 0 to 30; D represents H or C₁-C₃ alkyl; and E represents -CH₂CHOHCH₂OH, C₁-C₁₈ alkylol, -CH₂CH₂-(OCH₂CH₂)ₙ-OH where n is 0 to 30, or -CH₂CH₂-(OC(CH₃)HCH₂)ₘ-OH where m is 0 to 30; and
(c) optionally, the balance comprised of a polymerizable ethylenically unsaturated monomer, wherein (a), (b) and (c) are different from each other, and
(II) a polymer comprising:
(i) a C₈ to C₂₀ alkyl ester of (meth)acrylic acid;
(ii) a polymerizable ethylenically unsaturated monomer comprising a polar functional group; and
(iii) optionally, a polymerizable ethylenically unsaturated monomer, wherein (i), (ii) and (iii) are different from each other; and wherein the polymer has a glass transition temperature of no more than -10°C.

2. The coating composition of Claim 1 futher comprising an aqueous polyurethane dispersion comprising polyurethane-acrylate particles dispersed in an aqueous medium, said particles comprising the reaction product obtained by polymerizing the components of a pre-emulsion formed from:
(A) an active hydrogen-containing polyurethane acrylate prepolymer, comprising a reaction product obtained by reacting:
(i) a polyol;
(ii) a polymerizable ethylenically unsaturated monomer comprising a hydroxyl group;
(iii) a compound comprising a C₁-C₃₀ alkyl group having at least two active hydrogen groups comprising carboxylic acid groups, and/or hydroxyl groups wherein at least one active hydrogen group is a hydroxyl group; and
(iv) a polyisocyanate;
(B) a hydrophobic polymerizable ethylenically unsaturated monomer; and
(C) a crosslinking monomer;
wherein the prepolymer of (A) includes at least 30 percent by weight of polyurethane acrylate prepolymer comprising a prepolymer having a terminal polymerizable site of ethylenic unsaturation at one end of the molecule and an active hydrogen-containing group at the opposite end of the molecule; and at least 10 percent by weight of the polyurethane acrylate prepolymer- comprising a prepolymer having a terminal polymerizable site of ethylenic unsaturation at each end of the molecule.

3. The coating composition of Claim 1, wherein the crosslinking monomer (a) has two or more sites of polymerizable ethylenic unsaturation.

4. The coating composition of Claim 1, wherein the ethylenically unsaturated monomer having hydrophilic functional groups (b) comprises (meth)acrylamide, hydroxyethyl (meth)acrylate, hydroxypropyl (meth)acrylate, and/or dimethylaminoethyl (meth)acrylate.

5. The coating composition of Claim 1, wherein the average particle size of the polymeric microparticles of (I) ranges from 0.01 to 1 microns.

6. The coating composition of Claim 1, wherein the C₈ to C₂₀ alkyl ester of (meth)acrylic acid (i) of polymer (II) comprises octyl (meth)acrylate, lauryl (meth)acrylate, cetyl (meth)acrylate, stearyl (meth)acrylate, behenyl (meth)acrylate, and/or eicosyl (meth)acrylate.

7. The coating composition of Claim 6, wherein the C₈ to C₂₀ alkyl ester of (meth)acrylic acid (i) of polymer (II) is present at an amount of at least 50 weight percent and not more than 99.9 weight percent based on total weight of monomer solids present in polymer (II).

8. The coating composition of Claim 6, wherein the C₈ to C₂₀ alkyl ester of (meth)acrylic acid (i) of polymer (II) comprises lauryl (meth)acrylate.

9. The coating composition of Claim 1, wherein the polar functional group of the ethylenically unsaturated monomer (ii) of polymer (II) comprises carboxyl groups, hydroxyl groups, and/or amine groups.

10. The coating composition of Claim 9, wherein the polar functional group of the ethylenically unsaturated monomer (ii) of polymer (II) comprises a carboxyl group.

11. The coating composition of Claim 10, wherein the ethylenically unsaturated monomer (ii) of polymer (II) comprises (meth)acrylic acid.

12. The coating composition of Claim 1, wherein the ethylenically unsaturated monomer (ii) of polymer (II) is present at an amount of at least 0.1 weight percent and not more than 5 weight percent based on total weight of monomer solids present in polymer (II).

13. The coating composition of Claim 1, wherein the polymer (II) has a glass transition temperature of no more than -30°C.

14. The coating composition of Claim 1, wherein the polymer (II) is present in the coating composition at an amount of at least 2 weight percent and not more than 30 weight percent resin solids based on the total weight of resin solids of the coating composition.

15. The coating composition of Claim 2, wherein the polymerizable ethylenically unsaturated monomer comprising a hydroxyl group comprises a monomer comprising the formula 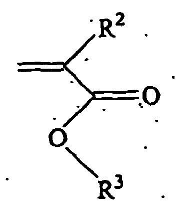 where R² represents H or C₁-C₄ alkyl and R³ represents -(CHR⁴)ₚ-OH,-CH₂CH₂-(O- CH₂-CHR⁴)ₚ-OH, -CH₂-CHOH-CH₂-O-CO-CR⁵R⁶R⁷, or -CH₂-CHR⁴-O-CH₂-CHOH-CH₂-O-CO-CR⁵R⁶R⁷ where R⁴ represents H or C₁-C₄ alkyl, R⁵, R⁶, and R⁷ represent H or C₁-C₂₀ linear or branched alkyl and p is an integer from 0 to 20.

16. The coating composition of Claim 2, wherein the compound (iii) comprises dimethylol propionic acid, and/or 12-hydroxystearic acid.

17. The coating composition of Claim 2, wherein the crosslinking monomer (C) has two or more sites of polymerizable ethylenic unsaturation.

18. A coated substrate comprising:
(a) a substrate; and
(b) the coating composition of Claim 1 over at least a portion of the substrate (a).

19. A thermosetting composition comprising:
(I) a first reactant comprising reactive functional groups;
(II) a curing agent comprising functional groups reactive with the functional groups of the first reactant (I); and
(III) a latex emulsion comprising crosslinked polymeric microparticles dispersed in an aqueous continuous phase, the polymeric microparticles prepared from a monomer mix comprising:
(a) at least 20 weight percent of a crosslinking monomer having two or more groups of reactive unsaturation and/or a monomer having a functional group capable of reacting to form crosslinks after polymerization;
(b) at least 2 weight percent of a polymerizable ethylenically unsaturated monomer having hydrophilic functional groups said monomer having the following structure (I) or (II): 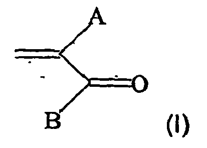 or 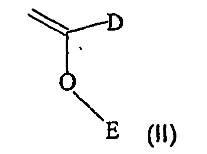 wherein A represents H or C₁-C₃ alkyl; B represents - NR¹R², -OR³ or -SR⁴, where R¹ and R² are independently H, C₁-C₁₈ alkyl, C₁-C₁₈ alkylol or C₁-C₁₈ alkylamino, R³ and R⁴ are independently C₁-C₁₈ alkylol, C₁-C₁₈ alkylamino, -CH₂CH₂-(OCH₂CH₂)ₙ-OH where n is 0 to 30, or , - CH₂CH₂-(OC(CH₃)HCH₂)ₘ-OH where m is 0 to 30; D represents H or C₁-C₃ alkyl; and E represents -CH₂CHOHCH₂OH, C₁-C₁₈ alkylol, -CH₂CH₂-(OCH₂CH₂)ₙ-OH where n is 0 to 30, or -CH₂PH₂-(OC(CH₃)HCH₂)ₘ-OH where m is 0 to 30; and
(c) optionally, the balance comprised of a polymerizable ethylenically unsaturated monomer, wherein (a), (b) and (c) are different from each other; and
(IV) a polymer comprising:
(i) a C₈ to C₂₀ alkyl ester of (meth)acrylic acid;
(ii) a polymerizable ethylenically unsaturated monomer comprising a polar functional group; and
(iii) optionally, a polymerizable ethylenically unsaturated monomer, wherein (i), (ii) and (iii) are different from each other; wherein the polymer has a glass transition temperature of no more than -10°C.

20. A method of repairing a defect in a multi-layer coating comprising:
(A) applying a first base coating composition over at least a portion of a substrate to form a first base coating layer thereover, the base coating composition comprising:
(I) a latex emulsion comprising crosslinked polymeric microparticles dispersed in an aqueous continuous phase, the polymeric microparticles prepared from a monomer mix comprising:
(a) at least 20 weight percent of a crosslinking monomer having two or more groups of reactive unsaturation and/or a monomer having a functional group capable of reacting to form crosslinks after polymerization:
(b) at least 2 weight percent of a polymerizable ethylenically unsaturated monomer having hydrophilic functional groups, the monomer having the following structure (I) or (II): 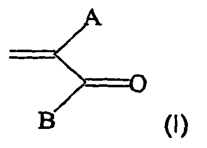 or 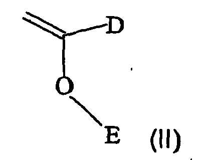 wherein A represents H or C₁-C₃ alkyl; B represents - NR¹R², -OR³ or -SR⁴, where R¹ and R² are independently H, C₁-C₁₈ alkyl, C₁-C₁₈ alkylol or C₁-C₁₈ alkylamino, R³ and R⁴ are independently C₁-C₁₈ alkylol, C₁-C₁₈ alkylamino, -CH₂CH₂-(OCH₂CH₂)ₙ-OH where n is 0 to 30, or,-CH₂CH₂-(OC(CH₃)HCH₂)ₘ-OH where m is 0 to 30, D represents H or C₁-C₃ alkyl; and E represents -CH₂CHOHCH₂OH, C₁-C₁₈ alkylol, -CH₂CH₂-(OCH₂CH₂)ₙ-OH where n is 0 to 30, or -CH₂CH₂-(OC(CH₃)HCH₂)ₘ-OH where m is 0 to 30; and
(c) optionally, the balance comprised of a polymerizable ethylenically unsaturated monomer, wherein (a), (b) and (c) are different from each other; and
(II) a polymer comprising:
(i) a C₈ to C₂₀ alkyl ester of (meth)acrylic acid;
(ii) a polymerizable ethylenically unsaturated monomer comprising a polar functional group; and
(iii) optionally, a polymerizable ethylenically , unsaturated monomer, wherein (i), (ii) and (iii) are different from each other;
wherein the polymer has a glass transition temperature of no more than -10°C;
(B) optionally, heating the first base coating layer at a temperature within the range of 160°F to 180°F (71°C to 82°C);
(C) applying a first topcoat composition over at least a portion of the first base coating layer to form a first topcoat layer thereover,
(D) heating the first topcoat layer at a temperature sufficient to form a cured multi-layer coating on the substrate, wherein the cured multi-layer coating comprises a coating defect;
(E) removing the coating defect;
(F) applying a second base coating composition which is the - same or different from the first base coating composition over at least a portion of the coated substrate of (D) to form a second base coating layer thereover;
(G) optionally, heating the coated substrate of (F) at a temperature within the range of 160°F to 180°F (71°C to 82°C);
(H) applying a second topcoat composition over at least a portion of the second base coating layer to form a second topcoat layer thereover; and
(I) heating the coated substrate of (H) at a temperature within the range of 180°F to 200°F (82°C to 93°C).

## Patentansprüche

1. Beschichtungszusammensetzung enthaltend:
(I) eine Latexemulsion, die vernetzte polymere Mikroteilchen dispergiert in einer wässrigen kontinuierlichen Phase enthält, wobei die polymeren Mikroteilchen aus einer Monomermischung hergestellt sind, die enthält:
(a) wenigstens 20 Gew.-% eines vernetzenden Monomers mit zwei oder mehr Gruppen von reaktiver Ungesättigtheit und/oder eines Monomers mit einer funktionellen Gruppe, die in der Lage ist zu reagieren, um Vernetzungen nach der Polymerisation zu bilden,
(b) wenigstens 2 Gew.-% eines polymerisierbaren ethylenisch ungesättigten Monomers mit hydrophilen funktionellen Gruppen, wobei das Monomer die folgende Struktur (I) oder (II) aufweist: 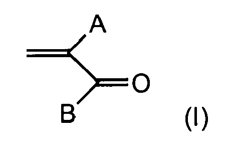 oder 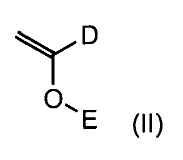 worin A für H oder C₁- bis C₃-Alkyl steht, B für -NR¹R², -OR³ oder -SR⁴ steht, worin R¹ und R² unabhängig voneinander H, C₁- bis C₁₈-Alkyl, C₁- bis C₁₈-Alkylol oder C₁- bis C₁₈-Alkylamino sind, R³ und R⁴ unabhängig voneinander C₁- bis C₁₈-Alkylol, C₁- bis C₁₈-Alkylamino, -CH₂CH₂-(OCH₂CH₂)ₙ-OH, worin n gleich 0 bis 30 ist, oder -CH₂CH₂-(OC(CH₃)HCH₂)ₘ-OH sind, worin m gleich 0 bis 30 ist, D für H oder C₁- bis C₃-Alkyl steht und E für -CH₂CHOHCH₂OH, C₁- bis C₁₈-Alkylol, -CH₂CH₂-(OCH₂CH₂)ₙ-OH, worin n gleich 0 bis 30 ist, oder -CH₂CH₂-(OC(CH₃)HCH₂)ₘ-OH steht, worin m gleich 0 bis 30 ist, und
(c) optional der Rest ein polymerisierbares ethylenisch ungesättigtes Monomer aufweist, wobei (a), (b) und (c) unterschiedlich voneinander sind, und (II) ein Polymer enthaltend:
(i) einen C₈- bis C₂₀-Alkylester der (Meth)acrylsäure,
(ii) ein polymerisierbares ethylenisch ungesättigtes Monomer, das eine polare funktionelle Gruppe aufweist, und
(iii) optional ein polymerisierbares ethylenisch ungesättigtes Monomer, wobei (i), (ii) und (iii) unterschiedlich voneinander sind und wobei das Polymer eine Glasübergangstemperatur von nicht mehr als -10°C aufweist.

2. Beschichtungszusammensetzung nach Anspruch 1, die zusätzlich eine wässrige Polyurethandispersion enthält, die Polyurethan-Acrylat-Teilchen dispergiert in einem wässrigen Medium enthält, wobei diese Teilchen das Reaktionsprodukt enthalten, erhalten durch Polymerisieren der Komponenten einer Präemulsion, die gebildet ist aus:
(A) einem aktiven Wasserstoff enhaltenden Polyurethan-Acrylat-Präpolymer, das ein Reaktionsprodukt enthält, erhalten durch Umsetzen von:
(i) einem Polyol,
(ii) einem polymerisierbaren ethylenisch ungesättigten Monomer, das eine Hydroxylgruppe aufweist,
(iii) einer Verbindung, die eine C₁- bis C₃₀-Alkylgruppe mit wenigstens zwei Gruppen, die aktiven Wasserstoff aufweisen, umfassend Carbonsäuregruppen und/oder Hydroxylgruppen, enthält, wobei wenigstens eine Gruppe mit aktivem Wasserstoff eine Hydroxylgruppe ist, und
(iv) einem Polyisocyanat,
(B) einem hydrophoben polymerisierbaren ethylenisch ungesättigten Monomer und
(C) einem vernetzenden Monomer,
wobei das Präpolymer von (A) wenigstens 30 Gew.-% Polyurethan-Acrylat-Präpolymer, das ein Präpolymer mit einer endständigen polymerisierbaren Stelle ethylenischer Ungesättigtheit an einem Ende des Moleküls und einer aktiven Wasserstoff enthaltenden Gruppe an dem gegenüberliegenden Ende des Moleküls enthält, und wenigstens 10 Gew.-% Polyurethan-Acrylat-Präpolymer enthält, das ein Präpolymer mit einer endständigen polymerisierbaren Stelle ethylenischer Ungesättigtheit an jedem Ende des Moleküls enthält.

3. Beschichtungszusammensetzung nach Anspruch 1, wobei das vernetzende Monomer (a) zwei oder mehr Stellen polymerisierbarer ethylenischer Ungesättigtheit aufweist.

4. Beschichtungszusammensetzung nach Anspruch 1, wobei das ethylenisch ungesättigte Monomer mit hydrophilen funktionellen Gruppen (b) (Meth)acrylamid, Hydroxyethyl(meth)acrylat, Hydroxypropyl(meth)acrylat und/oder Dimethylaminoethyl(meth)acrylat umfasst.

5. Beschichtungszusammensetzung nach Anspruch 1, wobei die mittlere Teilchengröße der polymeren Mikroteilchen von (I) im Bereich von 0,01 bis 1 µm liegt.

6. Beschichtungszusammensetzung nach Anspruch 1, wobei der C₈- bis C₂₀-Alkylester der (Meth)acrylsäure (i) des Polymers (II) Octyl(meth)acrylat, Lauryl(meth)acrylat, Cetyl(meth)acrylat, Stearyl(meth)acrylat, Behenyl(meth)acrylat und/oder Eicosyl(meth)acrylat enthält.

7. Beschichtungszusammensetzung nach Anspruch 6, wobei der C₈- bis C₂₀-Alkylester der (Meth)acrylsäure (i) des Polymers (II) in einer Menge von wenigstens 50 Gew.-% und nicht mehr als 99,9 Gew.-%, bezogen auf das Gesamtgewicht der Monomerfeststoffe, die in Polymer (II) vorhanden sind, vorliegt.

8. Beschichtungszusammensetzung nach Anspruch 6, wobei der C₈- bis C₂₀-Alkylester der (Meth)acrylsäure (i) des Polymers (II) Lauryl(meth)acrylat enthält.

9. Beschichtungszusammensetzung nach Anspruch 1, wobei die polare funktionelle Gruppe des ethylenisch ungesättigten Monomers (ii) des Polymers (II) Carboxylgruppen, Hydroxylgruppen und/oder Aminogruppen umfasst.

10. Beschichtungszusammensetzung nach Anspruch 9, wobei die polare funktionelle Gruppe des ethylenisch ungesättigten Monomers (ii) des Polymers (II) eine Carboxylgruppe umfasst.

11. Beschichtungszusammensetzung nach Anspruch 10, wobei das ethylenisch ungesättigte Monomer (ii) des Polymers (II) (Meth)acrylsäure umfasst.

12. Beschichtungszusammensetzung nach Anspruch 1, wobei das ethylenisch ungesättigte Monomer (ii) des Polymers (II) in einer Menge von wenigstens 0,1 Gew.-% und nicht mehr als 5 Gew.-%, bezogen auf das Gesamtgewicht der Monomerfeststoffe, die in Polymer (II) vorhanden sind, vorliegt.

13. Beschichtungszusammensetzung nach Anspruch 1, wobei das Polymer (II) eine Glasübergangstemperatur von nicht mehr als -30°C aufweist.

14. Beschichtungszusammensetzung nach Anspruch 1, wobei das Polymer (II) in der Beschichtungszusammensetzung in einer Menge von wenigstens 2 Gew.-% und nicht mehr als 30 Gew.-% Harzfeststoffe, bezogen auf das Gesamtgewicht der Harzfeststoffe in der Beschichtungszusammensetzung, vorhanden ist.

15. Beschichtungszusammensetzung nach Anspruch 2, wobei das polymerisierbare ethylenisch ungesättigte Monomer, das eine Hydroxylgruppe aufweist, ein Monomer umfasst mit der Formel 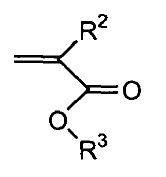 worin R² für H oder C₁- bis C₄-Alkyl steht und R³ für -(CHR⁴)ₚ-OH, -CH₂CH₂-(O-CH₂-CHR⁴)ₚ-OH, -CH₂-CHOH-CH₂-O-CO-CR⁵R⁶R⁷ oder -CH₂-CHR⁴-O-CH₂-CHOH-CH₂-O-CO-CR⁵R⁶R⁷ steht, worin R⁴ für H oder C₁- bis C₄-Alkyl steht, und R⁵, R⁶ und R⁷ für H oder lineares oder verzweigtes C₁- bis C₂₀-Alkyl stehen und p eine ganze Zahl von 0 bis 20 ist.

16. Beschichtungszusammensetzung nach Anspruch 2, wobei die Verbindung (iii) Dimethylolpropionsäure und/oder 12-Hydroxystearinsäure umfasst.

17. Beschichtungszusammensetzung nach Anspruch 2, wobei das vernetzende Monomer (C) zwei oder mehr Stellen von polymerisierbarerer ethylenischer Ungesättigtheit aufweist.

18. Beschichtetes Substrat enthaltend:
(a) ein Substrat und
(b) die Beschichtungszusammensetzung nach Anspruch 1 auf wenigstens einem Teil des Substrats (a).

19. Wärmehärtende Zusammensetzung, enthaltend:
(I) einen ersten Reaktanten, der reaktive funktionelle Gruppen enthält,
(II) ein Härtungsmittel, das funktionelle Gruppen enthält, die mit den funktionellen Gruppen des ersten Reaktanten (I) reaktiv sind, und
(III) eine Latexemulsion, die vernetzte polymere Mikroteilchen dispergiert in einer wässrigen kontinuierlichen Phase enthält, wobei die polymeren Mikroteilchen aus einer Monomermischung hergestellt sind, die enthält:
(a) wenigstens 20 Gew.-% eines vernetzenden Monomers mit zwei oder mehr Gruppen reaktiver Ungesättigtheit und/oder eines Monomers mit einer funktionellen Gruppe, die in der Lage ist zu reagieren, um Vernetzungen nach der Polymerisation zu bilden,
(b) wenigstens 2 Gew.-% eines polymerisierbaren ethylenisch ungesättigten Monomers mit hydrophilen funktionellen Gruppen, wobei dieses Monomer die folgende Struktur (I) oder (II) aufweist: 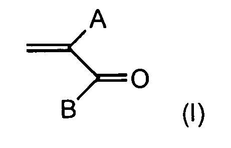 oder 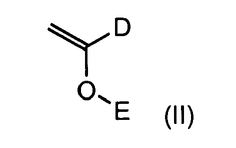 worin A für H oder C₁- bis C₃-Alkyl steht, B für -NR¹R², -OR³ oder -SR⁴ steht, worin R¹ und R² unabhängig voneinander H, C₁- bis C₁₈-Alkyl, C₁- bis C₁₈-Alkylol oder C₁- bis C₁₈-Alkylamino sind, R³ und R⁴ unabhängig voneinander C₁- bis C₁₈-Alkylol, C₁- bis C₁₈-Alkylamino, -CH₂CH₂-(OCH₂CH₂)ₙ-OH, worin n gleich 0 bis 30 ist, oder -CH₂CH₂-(OC(CH₃)HCH₂)ₘ-OH sind, worin m gleich 0 bis 30 ist, D für H oder C₁- bis C₃-Alkyl steht und E für -CH₂CHOHCH₂OH, C₁- bis C₁₈-Alkylol, -CH₂CH₂-(OCH₂CH₂)ₙ-OH, worin n gleich 0 bis 30 ist, oder -CH₂CH₂-(OC(CH₃)HCH₂)ₘ-OH steht, worin m gleich 0 bis 30 ist, und
(c) optional der Rest ein polymerisierbares ethylenisch ungesättigtes Monomer aufweist, wobei (a), (b) und (c) unterschiedlich voneinander sind, und (IV) ein Polymer enthaltend:
(i) einen C₈- bis C₂₀-Alkylester der (Meth)acrylsäure,
(ii) ein polymerisierbares ethylenisch ungesättigtes Monomer, das eine polare funktionelle Gruppe aufweist, und
(iii) optional ein polymerisierbares ethylenisch ungesättigtes Monomer, wobei (i), (ii) und (iii) unterschiedlich voneinander sind, wobei das Polymer eine Glasübergangstemperatur von nicht mehr als -10°C aufweist.

20. Verfahren zum Reparieren eines Defekts in einer Mehrschichtlackierung, umfassend:
(A) Aufbringen einer ersten Basislackzusammensetzung auf wenigstens einem Teil eines Substrats, um eine erste Basislackschicht darauf zu bilden, wobei die Basislackzusammensetzung enthält:
(I) eine Latexemulsion, die vernetzte polymere Mikroteilchen dispergiert in einer wässrigen kontinuierlichen Phase enthält, wobei die polymeren Mikroteilchen aus einer Monomermischung hergestellt sind, die enthält:
(a) wenigstens 20 Gew.-% eines vernetzenden Monomers mit zwei oder mehr Gruppen von reaktiver Ungesättigtheit und/oder eines Monomers mit einer funktionellen Gruppe, die in der Lage ist zu reagieren, um Vernetzungen nach der Polymerisation zu bilden,
(b) wenigstens 2 Gew.-% eines polymerisierbaren ethylenisch ungesättigten Monomers mit hydrophilen funktionellen Gruppen, wobei das Monomer die folgende Struktur (I) oder (II) aufweist: 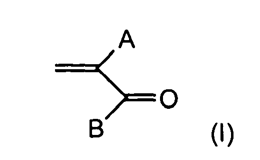 oder 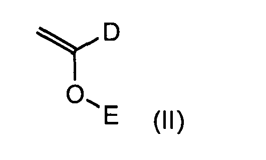 worin A für H oder C₁- bis C₃-Alkyl steht, B für -NR¹R², -OR³ oder -SR⁴ steht, worin R¹ und R² unabhängig voneinander H, C₁- bis C₁₈-Alkyl, C₁- bis C₁₈-Alkylol oder C₁- bis C₁₈-Alkylamino sind, R³ und R⁴ unabhängig voneinander C₁- bis C₁₈-Alkylol, C₁- bis C₁₈-Alkylamino, -CH₂CH₂-(OCH₂CH₂)ₙ-OH, worin n gleich 0 bis 30 ist, oder -CH₂CH₂-(OC(CH₃)HCH₂)ₘ-OH sind, worin m gleich 0 bis 30 ist, D für H oder C₁- bis C₃-Alkyl steht und E für -CH₂CHOHCH₂OH, C₁- bis C₁₈-Alkylol, -CH₂CH₂-(OCH₂CH₂)ₙ-OH, worin n gleich 0 bis 30 ist, oder -CH₂CH₂-(OC(CH₃)HCH₂)ₘ-OH steht, worin m gleich 0 bis 30 ist, und
(c) optional der Rest ein polymerisierbares ethylenisch ungesättigtes Monomer aufweist, wobei (a), (b) und (c) jeweils unterschiedlich voneinander sind, und
(II) ein Polymer enthaltend:
(i) einen C₈- bis C₂₀-Alkylester der (Meth)acrylsäure,
(ii) ein polymerisierbares ethylenisch ungesättigtes Monomer, das eine polare funktionelle Gruppe aufweist, und
(iii) optional ein polymerisierbares ethylenisch ungesättigtes Monomer, wobei (i), (ii) und (iii) unterschiedlich voneinander sind, wobei das Polymer eine Glasübergangstemperatur von nicht mehr als -10°C aufweist,
(B) optional Erwärmen der ersten Basislackschicht auf eine Temperatur innerhalb des Bereichs von 71°C bis 82°C (160°F bis 180°F),
(C) Aufbringen einer ersten Decklackzusammensetzung auf wenigstens einem Teil der ersten Basislackschicht, um eine erste Decklackschicht darauf auszubilden,
(D) Erwärmen der ersten Decklackschicht auf eine Temperatur, die ausreicht, um eine gehärtete Mehrschichtlackierung auf dem Substrat auszubilden, wobei die gehärtete Mehrschichtlackierung einen Beschichtungsdefekt aufweist,
(E) Entfernen des Beschichtungsdefekts,
(F) Aufbringen einer zweiten Basislackzusammensetzung, die die gleiche oder unterschiedlich ist von der ersten Basislackzusammensetzung auf wenigstens einem Teil des beschichteten Substrats von (D), um eine zweite Basislackschicht darauf auszubilden,
(G) optional Erwärmen des beschichteten Substrats von (F) auf eine Temperatur innerhalb des Bereichs von 71 °C bis 82°C (160°F bis 180°F),
(H) Aufbringen einer zweiten Decklackzusammensetzung auf wenigstens einem Teil der zweiten Basislackschicht, um eine zweite Decklackschicht darauf auszubilden, und
(I) Erwärmen des beschichteten Substrats von (H) auf eine Temperatur innerhalb des Bereichs von 82°C bis 93°C (180°F bis 200°F).

## Revendications

1. Composition d'enduction comprenant :
(I) une émulsion de latex comprenant des microparticules polymères réticulées dispersées dans une phase aqueuse continue, les microparticules polymères étant préparées à partir d'un mélange de monomères comprenant :
(a) au moins 20 pour cent en poids d'un monomère de réticulation contenant deux ou plus de deux groupes d'insaturation réactive et/ou un monomère contenant un groupe fonctionnel capable de réagir pour former des réticulations après polymérisation ;
(b) au moins 2 pour cent en poids d'un monomère éthyléniquement insaturé polymérisable contenant des groupes fonctionnels hydrophiles, le monomère ayant la structure (I) ou (II) suivante : 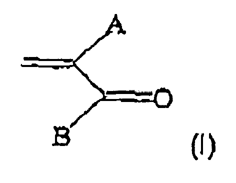 ou 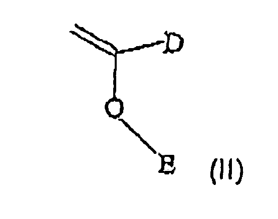 dans lesquelles A représente H ou un alkyle en C₁ à C₃ ; B représente -NR¹R², -OR³ ou -SR⁴, où R¹ et R² sont indépendamment H, un alkyle en C₁ à C₁₈, un alkylol en C₁ à C₁₈ ou un alkylamino en C₁ à C₁₈, R³ et R⁴ sont indépendamment un alkylol en C₁ à C₁₈, un alkylamino en C₁ à C₁₈, -CH₂CH₂-(OCH₂CH₂)ₙ-OH où n est 0 à 30, ou CH₂CH₂-(OC(CH₃)HCH₂)ₘ-OH où m est 0 à 30 ; D représente H ou un alkyle en C₁ à C₃ ; et E représente -CH₂CHOHCH₂OH, un alkylol en C₁ à C₁₈, -CH₂CH₂-(OCH₂CH₂)ₙ-OH où n est 0 à 30, ou -CH₂CH₂-(OC(CH₃)HCH₂)ₘ-OH où m est 0 à 30 ; et
(c) facultativement, le reste est composé d'un monomère éthyléniquement insaturé polymérisable, dans lequel (a), (b) et (c) sont différents les uns des autres, et
(II) un polymère comprenant :
(i) un ester d'alkyle en C₈ à C₂₀ d'acide (méth)acrylique ;
(ii) un monomère éthyléniquement insaturé polymérisable comprenant un groupe fonctionnel polaire ; et
(iii) facultativement, un monomère éthyléniquement insaturé polymérisable, dans lequel (i), (ii) et (iii) sont différents les uns des autres ; et dans lequel le polymère possède une température de transition vitreuse d'au plus -10 °C.

2. Composition d'enduction selon la revendication 1, comprenant en outre une dispersion aqueuse de polyuréthane comprenant des particules de polyuréthane-acrylate dispersées dans un milieu aqueux, lesdites particules comprenant le produit réactionnel obtenu en polymérisant les composants d'une pré-émulsion formée à partir :
(A) d'un prépolymère de polyuréthane-acrylate contenant des hydrogènes actifs, comprenant un produit réactionnel obtenu en faisant réagir :
(i) un polyol ;
(ii) un monomère éthyléniquement insaturé polymérisable comprenant un groupe hydroxyle ;
(iii) un composé comprenant un groupe alkyle en C₁ à C₃₀ contenant au moins deux groupes à hydrogène actif comprenant des groupes acides carboxyliques et/ou des groupes hydroxyles, dans lequel au moins un groupe à hydrogène actif est un groupe hydroxyle ; et
(iv) un polyisocyanate ;
(B) d'un monomère hydrophobe éthyléniquement insaturé polymérisable ; et
(C) d'un monomère de réticulation ;
dans lequel le prépolymère de (A) comprend au moins 30 pour cent en poids de prépolymère de polyuréthane-acrylate comprenant un prépolymère contenant un site terminal polymérisable d'insaturation éthylénique à une extrémité de la molécule et un groupe contenant un hydrogène actif à l'extrémité opposée de la molécule ; et au moins 10 pour cent en poids du prépolymère de polyuréthane-acrylate comprenant un prépolymère contenant un site terminal polymérisable d'insaturation à chaque extrémité de la molécule.

3. Composition d'enduction selon la revendication 1, dans laquelle le monomère de réticulation (a) contient deux ou plus de deux sites d'insaturation éthylénique polymérisable.

4. Composition d'enduction selon la revendication 1, dans laquelle le monomère éthyléniquement insaturé contenant des groupes fonctionnels hydrophiles (b) comprend un (méth)acrylamide, un (méth)acrylate d'hydroxyéthyle, un (méth)acrylate d'hydroxypropyle et/ou un (méth)acrylate de diméthylaminoéthyle.

5. Composition d'enduction selon la revendication 1, dans laquelle la taille moyenne de particule des microparticules polymères de (I) se situe dans la plage allant de 0,01 à 1 micron.

6. Composition d'enduction selon la revendication 1, dans laquelle l'ester d'alkyle en C₈ à C₂₀ d'acide (méth)acrylique (i) du polymère (II) comprend un (méth)acrylate d'octyle, un (méth)acrylate de lauryle, un (méth)acrylate de cétyle, un (méth)acrylate de stéaryle, un (méth)acrylate de béhényle et/ou un (méth)acrylate d'éicosyle.

7. Composition d'enduction selon la revendication 6, dans laquelle l'ester d'alkyle en C₈ à C₂₀ d'acide (méth)acrylique (i) du polymère (II) est présent en une quantité d'au moins 50 pour cent en poids et d'au plus 99,9 pour cent en poids sur la base du poids total des monomères solides présents dans le polymère (II).

8. Composition d'enduction selon la revendication 6, dans laquelle l'ester d'alkyle en C₈ à C₂₀ d'acide (méth)acrylique (i) du polymère (II) comprend le (méth)acrylate de lauryle.

9. Composition d'enduction selon la revendication 1, dans laquelle le groupe fonctionnel polaire du monomère éthyléniquement insaturé (ii) du polymère (II) comprend des groupes carboxyles, des groupes hydroxyles et/ou des groupes amines.

10. Composition d'enduction selon la revendication 9, dans laquelle le groupe fonctionnel polaire du monomère éthyléniquement insaturé (ii) du polymère (II) comprend un groupe carboxyle.

11. Composition d'enduction selon la revendication 10, dans laquelle le monomère éthyléniquement insaturé (ii) du polymère (II) comprend l'acide (méth)acrylique.

12. Composition d'enduction selon la revendication 1, dans laquelle le monomère éthyléniquement insaturé (ii) du polymère (II) est présent en une quantité d'au moins 0,1 pour cent en poids et d'au plus 5 pour cent en poids sur la base du poids total des monomères solides présents dans le polymère (II).

13. Composition d'enduction selon la revendication 1, dans laquelle le polymère (II) possède une température de transition vitreuse d'au plus -30 °C.

14. Composition d'enduction selon la revendication 1, dans laquelle le polymère (II) est présent dans la composition d'enduction en une quantité d'au moins 2 pour cent en poids et d'au plus 30 pour cent en poids de résines solides sur la base du poids total des résines solides de la composition d'enduction.

15. Composition d'enduction selon la revendication 2, dans laquelle le monomère éthyléniquement insaturé polymérisable contenant un groupe hydroxyle comprend un monomère de formule 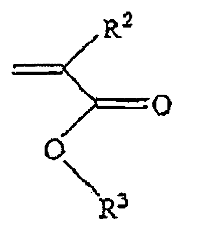 où R² représente H ou un alkyle en C₁ à C₄ et R³ représente -(CHR⁴)ₚ-OH, -CH₂CH₂-(O-CH₂-CHR⁴)ₚ-OH, -CH₂-CHOH-CH₂-O-CO-CR⁵R⁶R⁷ ou -CH₂-CHR⁴-O-CH₂-CHOH-CH₂-O-CO-CR⁵R⁶R⁷ où R⁴ représente H ou un alkyle en C₁ à C₄, R⁵, R⁶ et R⁷ représentent H ou un alkyle en C₁ à C₂₀ linéaire ou ramifié et p est un nombre entier de 0 à 20.

16. Composition d'enduction selon la revendication 2, dans laquelle le composé (iii) comprend l'acide diméthylol propionique et/ou l'acide 12-hydroxy-stéarique.

17. Composition d'enduction selon la revendication 2, dans laquelle le monomère de réticulation (C) contient deux ou plus de deux sites d'insaturation éthylénique polymérisable.

18. Substrat enduit comprenant :
(a) un substrat ; et
(b) la composition d'enduction selon la revendication 1 sur au moins une partie du substrat (a).

19. Composition thermodurcissable comprenant :
(I) un premier réactif comprenant des groupes fonctionnels réactifs ;
(II) un agent de durcissement comprenant des groupes fonctionnels réactifs avec les groupes fonctionnels du premier réactif (I) ; et
(III) une émulsion de latex comprenant des microparticules polymères réticulées dispersées dans une phase aqueuse continue, les microparticules polymères étant préparées à partir d'un mélange de monomères comprenant :
(a) au moins 20 pour cent en poids d'un monomère de réticulation contenant deux ou plus de deux groupes d'insaturation réactive et/ou un monomère contenant un groupe fonctionnel capable de réagir pour former des réticulations après polymérisation ;
(b) au moins 2 pour cent en poids d'un monomère éthyléniquement insaturé polymérisable contenant des groupes fonctionnels hydrophiles, ledit monomère ayant la structure (I) ou (II) suivante : 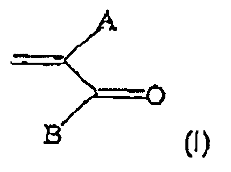 ou 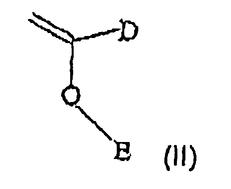 dans lesquelles A représente H ou un alkyle en C₁ à C₃ ; B représente -NR¹R², -OR³ ou -SR⁴, où R¹ et R² sont indépendamment H, un alkyle en C₁ à C₁₈, un alkylol en C₁ à C₁₈ ou un alkylamino en C₁ à C₁₈, R³ et R⁴ sont indépendamment un alkylol en C₁ à C₁₈, un alkylamino en C₁ à C₁₈, -CH₂CH₂-(OCH₂CH₂)ₙ-OH où n est 0 à 30, ou -CH₂CH₂-(OC(CH₃)HCH₂)ₘ-OH où m est 0 à 30 ; D représente H ou un alkyle en C₁ à C₃ ; et E représente -CH₂CHOHCH₂OH, un alkylol en C₁ à C₁₈, -CH₂CH₂-(OCH₂CH₂)ₙ-OH où n est 0 à 30, ou -CH₂CH₂-(OC(CH₃)HCH₂)ₘ-OH où m est 0 à 30 ; et
(c) facultativement, le reste est composé d'un monomère éthyléniquement insaturé polymérisable, dans lequel (a), (b) et (c) sont différents les uns des autres, et
(IV) un polymère comprenant : (i) un ester d'alkyle en C₈ à C₂₀ d'acide (méth)acrylique ;
(ii) un monomère éthyléniquement insaturé polymérisable comprenant un groupe fonctionnel polaire ; et
(iii) facultativement, un monomère éthyléniquement insaturé polymérisable, dans lequel (i), (ii) et (iii) sont différents les uns des autres ; dans lequel le polymère possède une température de transition vitreuse d'au plus -10 °C.

20. Procédé de réparation d'un défaut dans un revêtement multicouche comprenant
(A) l'application d'une première composition d'enduction de base sur au moins une partie d'un substrat pour former dessus une première couche d'enduction de base, la composition d'enduction de base comprenant :
(I) une émulsion de latex comprenant des microparticules polymères réticulées dispersées dans une phase aqueuse continue, les microparticules polymères étant préparées à partir d'un mélange de monomères comprenant :
(a) au moins 20 pour cent en poids d'un monomère de réticulation contenant deux ou plus de deux groupes d'insaturation réactive et/ou un monomère contenant un groupe fonctionnel capable de réagir pour former des réticulations après polymérisation ;
(b) au moins 2 pour cent en poids d'un monomère éthyléniquement insaturé polymérisable contenant des groupes fonctionnels hydrophiles, le monomère ayant la structure (I) ou (II) suivante : 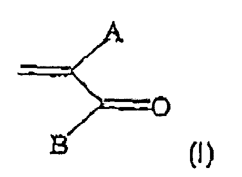 ou 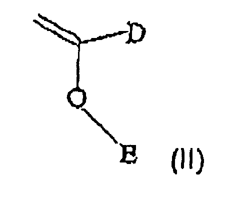 dans lesquelles A représente H ou un alkyle en C₁ à C₃ ; B représente -NR¹R², -OR³ ou -SR⁴, où R¹ et R² sont indépendamment H, un alkyle en C₁ à C₁₈, un alkylol en C₁ à C₁₈ ou un alkylamino en C₁ à C₁₈, R³ et R⁴ sont indépendamment un alkylol en C₁ à C₁₈, un alkylamino en C₁ à C₁₈, -CH₂CH₂-(OCH₂CH₂)ₙ-OH où n est 0 à 30, ou -CH₂CH₂-(OC(CH₃)HCH₂)ₘ-OH où m est 0 à 30 ; D représente H ou un alkyle en C₁ à C₃ ; et E représente -CH₂CHOHCH₂OH, un alkylol en C₁ à C₁₈, -CH₂CH₂-(OCH₂CH₂)ₙ-OH où n est 0 à 30, ou -CH₂CH₂-(OC(CH₃)HCH₂)ₘ-OH où m est 0 à 30 ; et
(c) facultativement, le reste est composé d'un monomère éthyléniquement insaturé polymérisable, dans lequel (a), (b) et (c) sont différents les uns des autres, et
(II) un polymère comprenant :
(i) un ester d'alkyle en C₈ à C₂₀ d'acide (méth)acrylique ;
(ii) un monomère éthyléniquement insaturé polymérisable comprenant un groupe fonctionnel polaire ; et
(iii) facultativement, un monomère éthyléniquement insaturé polymérisable, dans lequel (i), (ii) et (iii) sont différents les uns des autres ; dans lequel le polymère possède une température de transition vitreuse d'au plus -10 °C. ;
(B) facultativement, le chauffage de la première couche d'enduction de base à une température située dans la plage allant de 160 °F à 180 °F (71 °C à 82 °C) ;
(C) l'application d'une première composition de finition sur au moins une partie de la première couche d'enduction de base pour former dessus une première couche de finition ;
(D) le chauffage de la première couche de finition à une température suffisante pour former un revêtement multicouche durci sur le substrat, dans lequel le revêtement multicouche durci comprend un défaut de revêtement ;
(E) l'élimination du défaut de revêtement ;
(F) l'application d'une seconde composition d'enduction de base qui est identique ou différente de la première composition d'enduction de base sur au moins une partie du substrat enduit de (D) pour former dessus une seconde couche d'enduction de base ;
(G) facultativement, le chauffage du substrat enduit de (F) à une température située dans la plage allant de 160 °F à 180 °F (71 °C à 82 °C) ;
(H) l'application d'une seconde composition de finition sur au moins une partie de la seconde couche d'enduction de base pour former dessus une seconde couche de finition ; et
(I) le chauffage du substrat enduit de (H) à une température située dans la plage allant de 180 °F à 200 °F (82 °C à 93 °C).
